Europäisches Patentamt

European Patent Office

Office européen des brevets

(19)

(11) **EP 1 110 767 A1**

(12) **EUROPEAN PATENT APPLICATION**
published in accordance with Art. 158(3) EPC

(43) Date of publication:
**27.06.2001 Bulletin 2001/26**

(51) Int Cl.⁷: **B60G 17/08**, F16F 9/48

(21) Application number: **98965905.7**

(86) International application number:
**PCT/RU98/00420**

(22) Date of filing: **17.12.1998**

(87) International publication number:
**WO 00/06402 (10.02.2000 Gazette 2000/06)**

(84) Designated Contracting States:
**AT BE CH DE DK ES FI FR GB GR IE IT LI SE**

(30) Priority: **27.07.1998 RU 98114638**

(71) Applicants:
• **Ternovskiy, Yevgeniy Yvanovich
Chelyabinsk region, Ozyorsk 45787 (RU)**
• **Turov, Vladymir Grygoryevich
Chelyabinsk region, Ozyorsk 456787 (RU)**
(72) Inventors:
• **Ternovskiy, Yevgeniy Yvanovich
Chelyabinsk region, Ozyorsk 45787 (RU)**
• **Turov, Vladymir Grygoryevich
Chelyabinsk region, Ozyorsk 456787 (RU)**

(74) Representative: **HOFFMANN - EITLE
Patent- und Rechtsanwälte
Arabellastrasse 4
81925 München (DE)**

(54) **METHOD FOR ADJUSTING THE RESISTANCE OF A HYDRAULIC DAMPER, DEVICE FOR REALISING THE SAME AND VARIANTS**

(57) The present invention can be used in the suspension of vehicles for automatically modifying the resistance characteristics of a damper according to the amplitude of the defects on a road layout. This method involves modifying the flow section of a channel connecting the chambers of the damper according to the pressure difference between said chambers, wherein the movement of the damper piston is converted into a displacement of a damper part that influences the dimensions of the flow section of said channel. This method can be realised using various types of dampers, e.g. using a mobile flap mounted on the piston and co-operating with an helical guide or using a mobile bearing co-operating with a helical guide and connected to the piston through another helical guide.

**Description**

Field of the Invention

The present invention relates to the field of transport engineering, and more exactly to a method for adjusting the resistance force of a liquid damper and to a device for carrying out this method. The present invention can be used to the greatest advantage in suspensions of wheeled vehicles. Furthermore, it may be used in the suspensions of snowmobiles or vehicles on tracks, and also in the undercarriage of flying vehicles.

Background Art

A liquid damper is used to effectively prevent the development of resonance conditions during forced oscillations of the sprung and unsprung masses and to ensure the effective damping of oscillations of those masses in the suspension of a vehicle. The damper converts kinetic energy of the sprung mass and the unsprung mass, which they acquire during vertical oscillations, and the excess of potential energy, which is stored in an elastic element of the suspension, into heat energy and dissipates it into the environment. The cavity of the damper is divided into at least two chambers. The volume of one of those chambers, the compression (expansion) chamber is reduced, while the volume of the other, the expansion (compression) chamber increases due to the movement of a piston separating those chambers when the piston accomplishes forward (return) movement in the working cylinder of the damper. As a result of the change in the volume, a pressure is created in the compression (expansion) chamber, which is excessive in respect to the other cavities of the damper. Due to the effect of the excessive pressure, the working liquid flows through a compression (expansion) channel which couples the compression (expansion) chamber to the other cavities of the damper during the forward (return) movement of the piston. The action of the excessive pressure of the working liquid on the parts of the damper via which the damper interacts with the sprung mass and the unsprung mass of the vehicle creates a resistance force of the damper. Mechanical energy, spent on moving the piston, is consumed to accomplish the work on overcoming the resistance force of the damper. The absolute value of the resistance force of the damper is in inverse proportion to the flow cross section of the compression (expansion) channel and in direct proportion to the rate at which the volume of the damper cavities changes and, accordingly, to the speed at which the piston moves. The dependence of the resistance force of the damper on the speed of movement of its piston is called the characteristic of damper resistance. The characteristic of damper resistance is called hard where the absolute value of the resistance force in the working range of piston movement speeds is large. The characteristic of damper resistance is called soft where the absolute value of the resistance force in the working range of piston movement speeds is small.

In order to reduce the amplitude of oscillations of the sprung mass and to reduce the force acting on the sprung mass, it is necessary to increase the absolute value of the resistance force of the damper during the damping of the oscillations of the sprung mass and during the action of external excitations (unevenness of a road) on the vehicle, the frequency of which approximately coincides with the cyclic frequency of free oscillations of the sprung mass itself.

In order to reduce the amplitude of oscillations of the sprung mass and to reduce the force acting on the sprung mass, it is necessary to reduce the absolute value of the resistance force of the damper while there are external excitations acting on the vehicle, the repetition frequency of which is greater than the cyclic frequency of free oscillations of the sprung mass.

Fulfillment of the aforesaid requirements is effected by adjusting the resistance force created by the damper.

A method of adjusting the resistance force of a liquid damper is known from laid-open German application DE 41 39 746 A1. This method is based on the difference in the speeds of movement of the damper piston and, accordingly, the differences in the values of the excessive pressure of the working liquid formed in the compression (expansion) chamber, which are characteristic for high-frequency forced oscillations of the sprung mass and free oscillations of the sprung mass. The method consists of changing the flow cross section of the compression (expansion) channel in direct proportion to the value of the excessive pressure in the compression (expansion) chamber. Wherein, the current value of the flow cross section of the compression (expansion) channel is formed by the cross section of a constant restrictor, which constantly couples the compression (expansion) chamber to the other cavities of the damper, and the current cross section of the slit of the compression (expansion) valve. If there is no constant restrictor, the current value of the cross section of the compression (expansion) channel is equal to the current cross section of the slit of the compression (expansion) valve. A change in the cross section of the compression (expansion) channel is attained in that the force with which the excessive pressure acts on a movable element of the compression (expansion) valve, the current position of which determines the current linear size of the valve slit, is balanced by an oppositely directed elastic force of an elastic element of that valve. The movable element of the valve may be any structural element which closes the outlet aperture of the channel supplying the working liquid. Such an element may be, for example, a plate, a ball or a plunger.

A device for carrying out the described method is also known from laid-open German patent DE 41 39 746 A1. This device is a liquid damper having compression and expansion chambers which are formed as a result of dividing the cavity of the damper with a piston which is secured to the end of a rod. The piston consists of at least two elements. A compression (expansion) channel consists of a constant restrictor and a compression (expansion) valve. The constant restrictor is positioned in the body of the piston and ensures constant coupling of the compression and expansion chambers. There may be no constant restrictor. In that case the compression (expansion) channel only has a compression (expansion) valve. The compression (expansion) valve includes:

a) a supply channel which is made in the body of the piston and has at least one inlet aperture positioned from the side of the compression (expansion) chamber, and at least one outlet aperture positioned from the side of the expansion (compression) chamber;
b) a plate which closes the outlet aperture of the supply channel from the side of the expansion (compression) chamber,
c) an elastic element, the action of the elastic force of which on the plate is directed towards the piston;
d) a support for the elastic element, which fixes the position of the end of the elastic element opposite to the piston along the longitudinal axis of the damper relative to the seat of the valve.

The plate of the compression (expansion) valve and its elastic element may be structurally combined in one element in which an elastic force is produced when it is bent relative to the plane of conjugation of that element with the valve seat.

When there is an excessive pressure of the working liquid in the compression (expansion) chamber, the effective force of which on the plate of the compression (expansion) valve is less than the elastic force of the elastic element of that valve, which acts on the plate in the absence of excessive pressure in the compression (expansion) chamber, the outlet aperture of the supply channel of the compression (expansion) valve is closed by the plate and the flow cross section of the compression (expansion) channel is equal to the cross section of the constant restrictor or, if there is no constant restrictor, is absent. When the excessive pressure increases, the plate opens the outlet aperture of the supply channel of the compression (expansion) valve and the flow cross section of the compression (expansion) channel increases in direct proportion to the value of the excessive pressure, right up to the maximum value which is equal to the sum of the cross section of the constant restrictor and the cross section of the supply channel of the compression (expansion) valve or is equal to the cross section of the supply channel of the compression (expansion) valve if there is no constant restrictor.

The known method does not make it possible to a sufficient degree to adjust the resistance force of the damper because of the absence of a difference between piston stroke speeds in the case of large amplitude oscillations at a frequency approximately equal to the natural cyclic frequency of free oscillations of the sprung mass and, in the case of small and average amplitude oscillations at a frequency which is several times higher than the natural cyclic frequency of free oscillations of the sprung mass.

Therefore, in order to substantially reduce the amplitude of the oscillations of the sprung mass and to reduce the force acting on the sprung mass when the vehicle is subjected to the action of external excitations, the repetition frequency of which approximately coincides with the natural cyclic frequency of the free oscillations of the sprung mass, the damper should have a sufficiently hard resistance characteristic. However, in the second case, such a damper causes an increase in the amplitude of oscillations of the sprung mass and an increase in the force acting thereon, as compared with a damper which has a soft resistance characteristic.

In order to reduce the amplitude of oscillations of the sprung mass and to reduce the force acting on the sprung mass when the vehicle is subjected to the action of external excitations, the repetition frequency of which is several times higher than the natural cyclic frequency of the free oscillations of the sprung mass, the damper should have a sufficiently soft resistance characteristic. However, in the first case, such a damper dissipates an insufficient amount of energy and causes an increase in the amplitude of oscillations of the sprung mass and an increase of the force acting thereon, as compared with a damper which has a hard resistance characteristic.

Disclosure of the Invention

The present invention solves the problem of automatically changing the resistance characteristic of a damper in relation to the amplitude of an external excitation (automatic adaptation of the damper to the character of a road surface), which makes it possible to attain:

a) a reduction of the force acting on the sprung mass and a reduction of the amplitude of its oscillations during the time of action of the external excitations on the vehicle, the repetition frequency of which is at least two times higher than the natural cyclic frequency of free oscillations of the sprung mass, as compared with a damper in which a known method of adjusting the resistance force is used and which has a hard resistance characteristic;
b) a reduction of the force acting on the sprung mass and a reduction of the amplitude of its oscillations during the time of action of the external excitations on the vehicle, the repetition frequency of which approximately coincides with the natural cyclic frequency of the free oscillations of the sprung mass, as compared with a damper in which a known method of adjusting the resistance force is known and which has a soft resistance characteristic.

The technical result obtained by use of each of the variants of the present invention is expressed by:

a) a reduction of the force acting on the sprung mass and a reduction of the amplitude of its oscillations during the time of action of the external excitations on the vehicle, the repetition frequency of which is at least two times higher than the natural cyclic frequency of free oscillations of the sprung mass, as compared with a damper in which a known method of adjusting the resistance force is used and which has a hard resistance characteristic;
b) a reduction of the force acting on the sprung mass and a reduction of the amplitude of its oscillations during the time of action of the external excitations on the vehicle, the repetition frequency of which approximately coincides with the natural cyclic frequency of the free oscillations of the sprung mass, as compared with a damper in which a known method of adjusting the resistance force is known and which has a soft resistance characteristic;
c) a reduction of the force acting on the sprung mass and a reduction of the amplitude of its oscillations when a single external excitation is exerted on the vehicle.

The proposed method for adjusting the resistance force of a liquid damper comprises the adjustment which is carried out in the known method and additional adjustment depending on the current position of the piston in the working cylinder of the damper, due to which the damper automatically adapts to the character of the road surface.

The proposed method consists in that, as in the known method, the flow cross section of the compression (expansion) channel is changed in direct proportion to the value of the excessive pressure in the compression (expansion) chamber. Correspondence of the cross section size of the compression (expansion) channel to the current value of the excessive pressure of the working liquid in the compression (expansion) chamber is provided in that the force with which the excessive pressure acts on a movable element of a compression (expansion) valve, the current position of which determines the current linear size of the valve slit, is balanced by an oppositely directed elastic force of an elastic element of that valve.

The proposed method has the following distinctions over the known method. In order to carry out additional adjustment, a controlled displacement of at least one part of the damper is provided, the position of this part relative to another part of the damper affecting the magnitude of the flow cross section of the compression (expansion) channel. The forward (return) movement of the piston in the working cylinder of the damper is converted into a change in the position of those parts relative to one another, and each such position of the parts is set in accordance with the size of the flow cross section of the compression (expansion) channel, which corresponds to a constant value of the excessive pressure.

The proposed method has seven main variants indicated below and also derivatives of the variants, which are different combinations of the main variants.

Variant 1. Forward (return) movement of the piston is converted into a turn of a damper part closing a constant restrictor relative to a damper part in which an aperture of the constant restrictor is made. Each angle of turn of these parts relative to each other sets in accordance therewith the degree of closure of the aperture of the constant restrictor by the movable part and accordingly, the flow cross section of the constant restrictor.

Variant 2. Forward (return) movement of the piston is converted into linear displacement of the damper part closing the constant restrictor relative to the part of the damper in which an aperture of the constant restrictor is made. Each position of these parts relative to each other sets in accordance therewith the degree of closure of the aperture of the constant restrictor by the movable part and accordingly, the flow cross section of the constant restrictor.

Variant 3. Forward (return) movement of the piston is converted into a turn of a damper part closing a supply channel of a compression (expansion) valve relative to a damper part in which an aperture of that supply channel is made. Each angle of turn of these parts relative to each other sets in accordance therewith the degree of closure of the aperture of the supply channel by the movable part and accordingly, the flow cross section of the constant restrictor.

Variant 4. Forward (return) movement of the piston is converted into linear displacement of the damper part closing a supply channel of a compression (expansion) valve relative to a damper part in which an aperture of that supply channel is made. Each position of these parts relative to each other sets in accordance therewith the degree of closure of the aperture of the supply channel by the movable part and accordingly the flow cross section of the supply channel of the compression (expansion) valve.

Variant 5. Forward (return) movement of a piston is converted into a turn of a damper part relative to another damper part, which together with the first part forms a seat of a compression (expansion) valve. Each angle of turn of those parts relative to each other sets in accordance therewith a value of the area limited by the seat of the compression (expansion) valve and the force with which the excessive pressure of the working liquid in the compression (expansion) chamber acts on a movable element of the compression (expansion) valve, the current position of which determines the current linear size of a slit of that valve, and consequently sets in accordance therewith the value of the cross section of the slit of the compression (expansion) valve corresponding to a constant value of the excessive pressure of the working liquid in the compression (expansion) chamber.

Variant 6. Forward (return) movement of a piston is converted into linear displacement of a damper partrelative to another damper part which together with the first part forms a seat of a compression (expansion) valve. Each position of these parts relative to each other sets in accordance therewith the value of the area limited by the seat of the compression (expansion) valve and the force with which the excessive pressure of the working liquid in the compression (expansion) chamber acts on a movable element of the compression (expansion) valve, the current position of which determines the current linear size of the slit of that valve, and consequently sets in accordance therewith the value of the cross section of the slit of the compression (expansion) valve, corresponding to a constant value of the excessive pressure of the working liquid in the compression (expansion) chamber.

Variant 7. Forward (return) movement of the piston is converted into linear displacement of a support of an elastic element of the compression (expansion) valve relative to a seat of that valve. Each position of the support relative to the seat sets in accordance therewith the value of the elastic deformation of an elastic element of the compression (expansion) valve and the elastic force with which the elastic element acts on a movable element of the valve, the current position of which determines the current linear size of the slit of that valve. Thus, each position of the support relative to the seat of the compression (expansion) valve sets in accordance therewith the value of the cross section of the slit of that valve, corresponding to a constant value of the excessive pressure of the working liquid in the compression (expansion) chamber.

A device for carrying out the first and third main variants of the proposed method is a liquid damper which has a compression chamber and an expansion chamber, which are formed as a result of dividing the damper cavity with a piston. The piston is secured to an end of a rod and consists of at least two elements. During the forward (return) movement of the piston in the working cylinder of the damper, the flow of the working liquid from the compression (expansion) chamber into the expansion (compression) chamber goes through a compression (expansion) channel which includes at least a compression (expansion) valve. The compression (expansion) valve has:

a) a supply channel which is made in the body of the piston and has at least one inlet aperture, which is positioned from the side of the compression (expansion) chamber, and at least one outlet aperture, which is positioned at the side of the expansion (compression) chamber;

b) a plate which closes the outlet aperture of the supply channel from the side of the expansion (compression) chamber;

c) an elastic element, the action of the elastic force of which on the plate is directed towards the piston.

The proposed device has the following distinctions over the known device which is designed to carry out the known method.

At least two elements of the piston have the possibility of separately turning about the longitudinal axis of the working cylinder of the damper. The device has a cylindrical structural element which is coaxial with the rod of the damper. At least two longitudinal guides are made on that section of the surface of that element which coincides with the stroke of the piston. At least one of those guides is made helical. At each point of the piston stroke, the central angle between those guides sets the angle of turn of the first element of the piston relative to the second element of the piston. At least one structural element is positioned on the side surface of both the first and the second elements of the piston. By means of this structural element, the first element of the piston interacts with one of the guides of the cylindrical structural element, while the second element of the piston interacts with another guide of the cylindrical structural element. Any element which transmits a force occurring at the heel of its contact with a guide to an element of the piston may be such a structural element. This structural element may be made, for example, in the form of a protrusion on a side surface of an element of the piston or in the form of a ball having a seat on a side surface of an element of the piston. At least two apertures, one of which is made in the first element of the piston, while the other is made in the second element of the piston, form a through channel in the body of the piston. With the piston in the position corresponding to the minimum flow cross section of the compression (expansion) channel with the compression (expansion) valve completely open, the flow cross section of the through channel, formed by the apertures of the first and second elements of the piston, at the most is less than the flow cross section of that through channel in the piston position corresponding to the maximum flow cross section of the compression (expansion) channel with the compression (expansion) valve completely open.

The proposed device may have two variants, which are distinctive in that:

a) the guides with which the elements of the piston interact are made on the inner surface of the working cylinder of the damper;

b) the rod of the damper is made hollow, the guides with which the elements of the piston interact are made on the external surface of a pin which is secured on the bottom of the compression chamber and which moves into the cavity of the rod during forward movement of the piston.

The device for carrying out the third and fifth main variants of the proposed method has the following distinctions over the device designed for carrying out the first and third main variants of the proposed method.

The piston of the damper has a third element which is similar to the first two elements and is positioned at the side of the compression chamber or the expansion chamber. An additional guide, similar to the other guides, is made on the surface of the cylindrical structural element. The third element of the piston interacts with the additional guide. At each point of the piston stroke, the central angle between that guide and the guide interacting with the element of the piston which is positioned in the middle of the piston sets the angle of turn of those elements of the piston relative to one another. The supply channel of the compression (expansion) valve is formed by at least three apertures. Each of these apertures is made in one of the three elements. All of these apertures have the shape of a sector of a ring with the center on the longitudinal axis of the working cylinder of the damper and have identical external and internal radiuses. The radial side of the aperture of the supply channel of the compression (expansion) valve, made in the element of the piston which is positioned in the middle of the piston, which approaches the radial side of the outlet aperture of the supply channel during the reduction of the flow cross section of that same supply channel, is limited by a protrusion on the element of the piston. This protrusion has the shape of a sector of a ring with a center on the longitudinal axis of the working cylinder of the damper and extends through the outlet aperture of the supply channel of the compression (expansion) valve. This protrusion, together with the piston element surface which limits the outlet aperture from the side of the expansion (compression) chamber, forms a seat of the compression (expansion) valve. At each point of the piston stroke, the flow cross section formed by the inlet aperture of the supply channel of the compression (expansion) valve and the aperture of that same supply channel, which is made in the piston element that is positioned in the middle of the piston, is at least equal to the flow cross section formed by the latter aperture and the outlet aperture of the supply channel of the compression (expansion) valve.

A device for carrying out the second and fourth main variants of the proposed method is a liquid damper which has a compression chamber and an expansion chamber, which are formed as a result of dividing the damper cavity with a piston. The piston is secured to an end of a rod and consists of at least two elements. During the forward (return) movement of the piston in the working cylinder of the damper, the flow of the working liquid from the compression (expansion) chamber into the expansion (compression) chamber goes through a compression (expansion) channel which includes at least a compression (expansion) valve. The compression (expansion) valve has:

a) a supply channel which is made in the body of the piston and has at least one inlet aperture, which is positioned at the side of the compression (expansion) chamber, and at least one outlet aperture, which is positioned at the side of the expansion (compression) chamber;
b) a plate which closes the outlet aperture of the supply channel from the side of the expansion (compression) chamber;
c) an elastic element, the action of the elastic force of which on the plate is directed towards the piston.

The proposed device has the following distinctions over the known device designed to carry out the known method.

At least one through aperture in the piston is closed by a movable gate. The device has a longitudinal structural element. At least one longitudinal guide is made on a surface section of that structural element, which at least coincides with the stroke of the piston. The movable gate is pressed against the guide by an elastic element. The transverse profile of that guide sets in each point of the piston stroke a position of the movable gate relative to the aperture being closed thereby. In the position of the piston corresponding to the minimum flow cross section of the compression (expansion) channel with the compression (expansion) valve completely open, the flow cross section of the channel formed by the movable gate and the aperture being closed therewith is, at the most, less than the flow cross section of that same channel in the piston position corresponding to the maximum flow cross section of the compression (expansion) channel with the compression (expansion) valve completely open.

The proposed device may have two variants which are distinguished in that:

a) the guide with which the movable gate interacts is made on the inner surface of the working cylinder of the damper;
b) the rod of the damper is made hollow, the guide with which the movable gate interacts is made on the external surface of a pin which is secured on the bottom of the compression chamber and which during the forward movement of the piston moves into the cavity of the rod.

The device for carrying out the fourth and sixth main variants of the proposed method has the following distinctions over the device designed for carrying out the second and fourth main variants of the proposed method.

The aperture closed by the movable gate forms a supply channel of the compression (expansion) valve. The size of that aperture, which is perpendicular to the direction of movement of the gate, is constant.

The movable gate has a protrusion which is perpendicular to the direction of its movement. This protrusion passes through the aperture to be closed by the gate and together with the piston surface, which limits that aperture from the side of the expansion (compression) chamber, forms a seat of the compression (expansion) valve.

The device for carrying out the seventh main variant of the proposed method is a liquid damper which has a compression chamber and an expansion chamber which are formed as a result of dividing the cavity of the damper with a piston. The piston is secured to an end of a rod. During forward (return) movement of the piston in the working cylinder of the damper, the flow of the working liquid from the compression (expansion) chamber into the expansion (compression) chamber takes place through a compression (expansion) channel which includes at least a compression (expansion) valve. The compression (expansion) valve has:

a) a supply channel which is made in the body of the piston and has at least one inlet aperture positioned at the side of the compression (expansion) chamber and at least one outlet aperture positioned at the side of the expansion (compression) chamber;

b) a plate which closes the outlet aperture of the supply channel at the side of the expansion (compression) chamber;

c) an elastic element, the elastic deformation of which occurs along the longitudinal axis of the working cylinder of the damper;

d) a support for the elastic element, which support fixes the position of the end of the elastic element opposite the piston relative to the seat of the valve.

The proposed device has the following distinctions over the known device designed to carry out the known method.

The piston of the damper and the support of the elastic element of the compression (expansion) valve have the possibility of separately turning about the longitudinal axis of the working cylinder of the damper. At least two longitudinal guides are made on the inner surface of the working cylinder of the damper, on the section coinciding with the stroke of the piston. At least one of these guides is made helical. In each point of the piston stroke the central angle between those guides sets the angle of turn of the support of the elastic element of the compression (expansion) valve relative to the piston. A structural element, via which the piston interacts with one of the guides, is positioned on the side surface of the piston facing the inner surface of the working cylinder of the damper. A structural element, via which the support of the elastic element of the compression (expansion) valve interacts with another guide, is positioned on the side surface of the support, which faces the inner surface of the working cylinder of the damper. The support of the elastic element of the compression (expansion) valve has the possibility of moving along the cylindrical shank of the piston, the axis of which coincides with the longitudinal axis of the working cylinder of the damper. At least one longitudinal helical guide is made on the outer surface of that shank. This guide sets the longitudinal position of the support of the elastic element of the compression (expansion) valve on the cylindrical shank of the piston for each angle of turn of that support relative to the piston. A structural element, via which the support of the elastic element of the compression (expansion) valve interacts with the guide positioned on the shank of the piston, is positioned on the side surface of the support, which faces the cylindrical shank of the piston. The structural element via which the support of the elastic element of the compression (expansion) valve interacts with the guide made on the working cylinder of the damper, has the possibility of moving along that support in the direction of the longitudinal axis of the working cylinder of the damper by a distance at least equal to the maximum magnitude of movement of that support along the cylindrical shank of the piston.

Brief Description of the Drawings and Diagrams

The instant application for the invention comprises drawings of devices, which illustrate the possibility of carrying out the proposed method for adjusting the resistance force of a liquid damper, and diagrams, which confirm the possibility of obtaining the claimed technical result when the proposed method is used.

Fig. 1 shows a device for carrying out the first main variant of the proposed method.

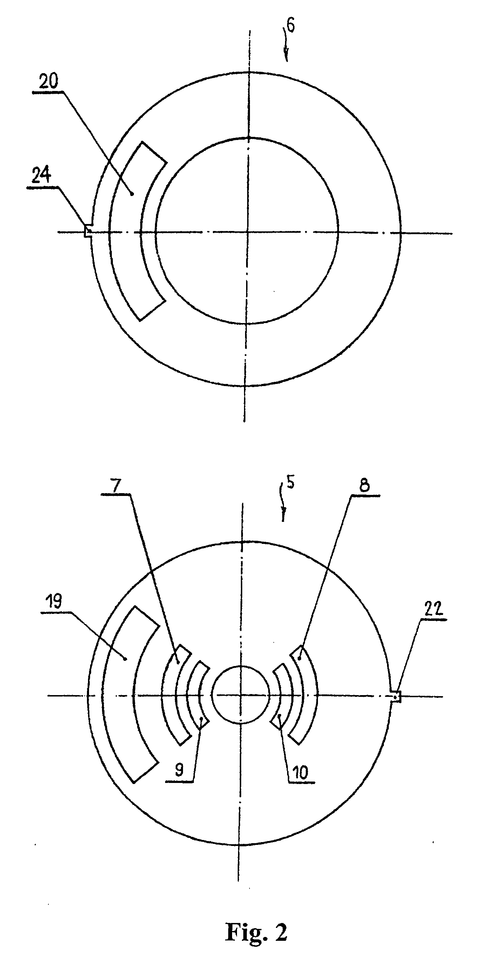

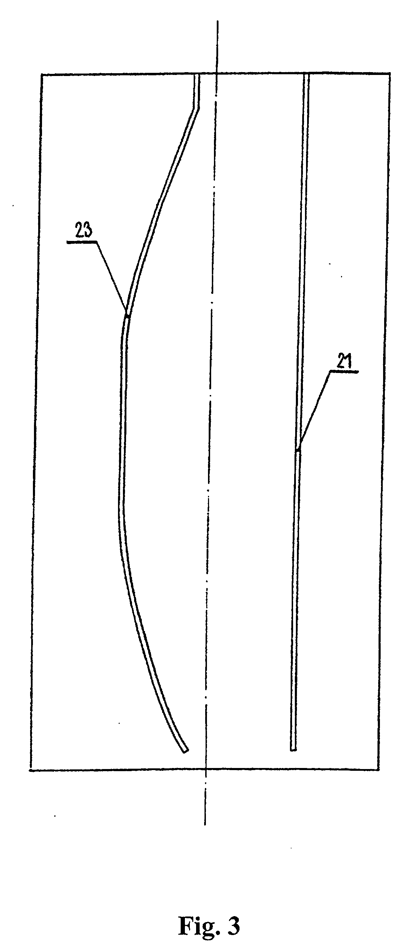

Fig. 2 shows a top view of part (6) and part (5) of the device shown in Fig. 1. Fig. 3 shows a developed view of the inner surface of part (1) of the device shown in Fig. 1.

Fig. 4 shows a device for carrying out the third and fifth main variants of the proposed method.

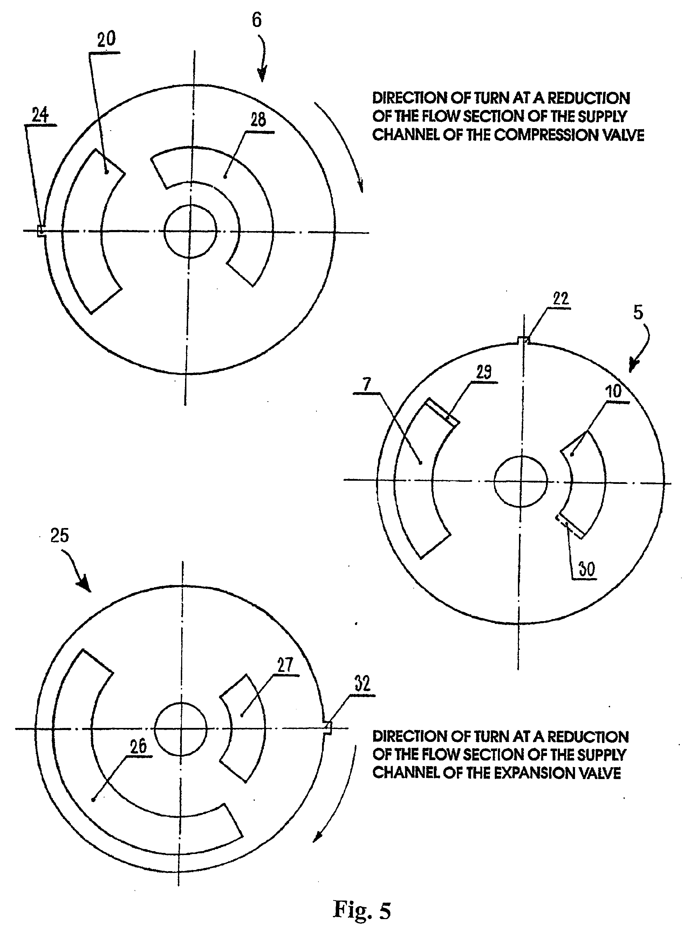

Fig. 5 shows a top view of part (6), part (5) and part (25) of the device shown in Fig. 4.

Fig. 6 shows a developed view of the inner surface of part (1) of the device shown in Fig. 4.

Fig. 7 shows a device for carrying out the second main variant of the proposed method.

Fig. 8 shows a device for carrying out the fourth and sixth main variants of the proposed method.

Fig. 9 shows a device for carrying out the seventh main variant of the proposed method.

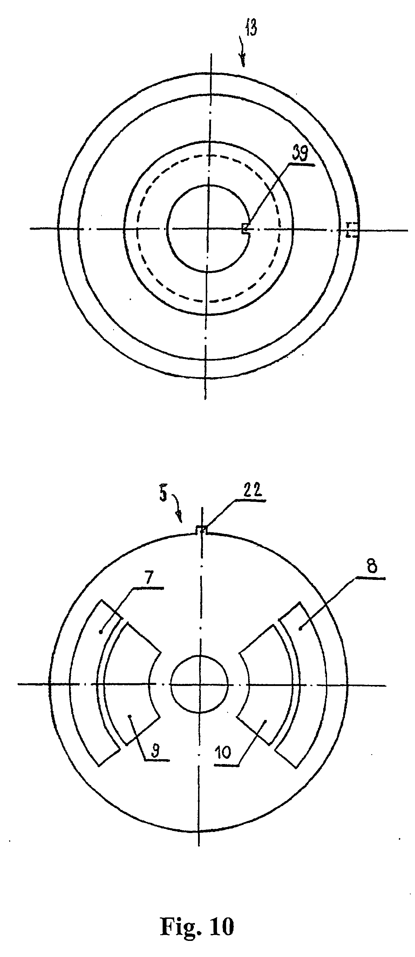

Fig. 10 shows a top view of part (13) and part (5) of the device shown in Fig. 9.

Figs. 11-36 show diagrams which confirm the possibility of attaining the claimed technical result when the proposed method is used, Three diagrams, each one of which corresponds to one of the following dampers, are shown on each drawing, with the exception of Fig. 11 and Fig. 12:

a) a damper in which a known method for adjusting the resistance force is used and which has a soft resistance characteristic (these diagrams are shown by a dotted line);

b) a damper in which a known method for adjusting the resistance force is used and which has a hard resistance characteristic (these diagrams are shown by a thin solid line);

c) a damper in which the proposed method for adjusting the resistance force is used (these diagrams are shown by a thick solid line).

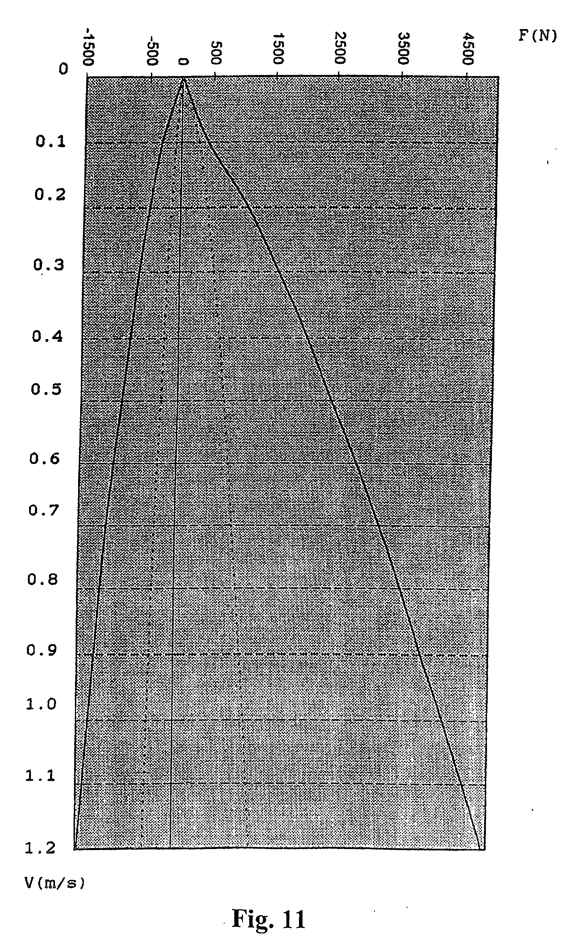

Fig. 11 shows the relationship between the resistance force created by the damper and the absolute value of the speed of movement of the damper piston (resistance characteristic). Shown in this drawing are the resistance characteristics of a damper in which a known method for adjusting the resistance force is used and which has a soft resistance characteristic (dotted line) and of a damper in which a known method for adjusting the resistance force is used and which has a hard resistance characteristic (solid line). The forces created during forward movement of the piston (compression of the suspension of the vehicle) are shown in the negative branch of the coordinate system. The forces created during the return movement of the piston (expansion of the suspension of the vehicle) are shown in the positive branch of the coordinate system.

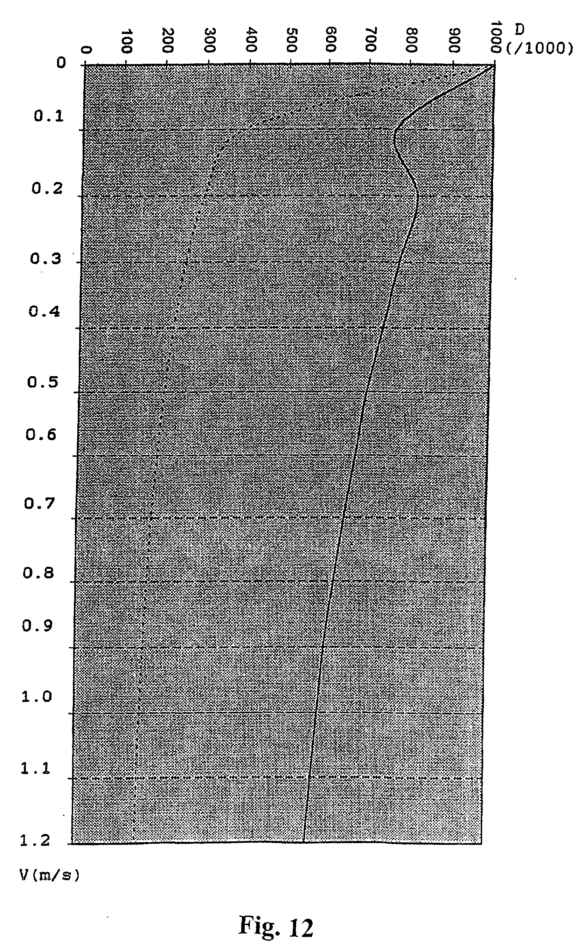

Fig. 12 shows the relationship between the damping of the sprung mass and the speed of movement of the damper piston for a damper in which the known method for adjusting a resistance force is used and which has a soft resistance characteristic (dotted line) and for a damper in which a known method for adjusting a resistance force is used and which has a hard resistance characteristic (solid line). The damping is calculated according to the equation:

$$D = 0.5*(Fe/V+Fa/V)/(2*(C*M)^{1/2})$$

where

D is the damping of the sprung mass;

Fe is the resistance force of the damper during forward movement of the piston;

Fa is the resistance force of the damper during return movement of the piston;

V is the absolute value of the speed of piston movement;

C is the rigidity of the elastic element of the suspension of the vehicle;

M is the value of the sprung mass of the vehicle.

Damping is calculated under condition that the kinematic transmission ratio is equal to one.

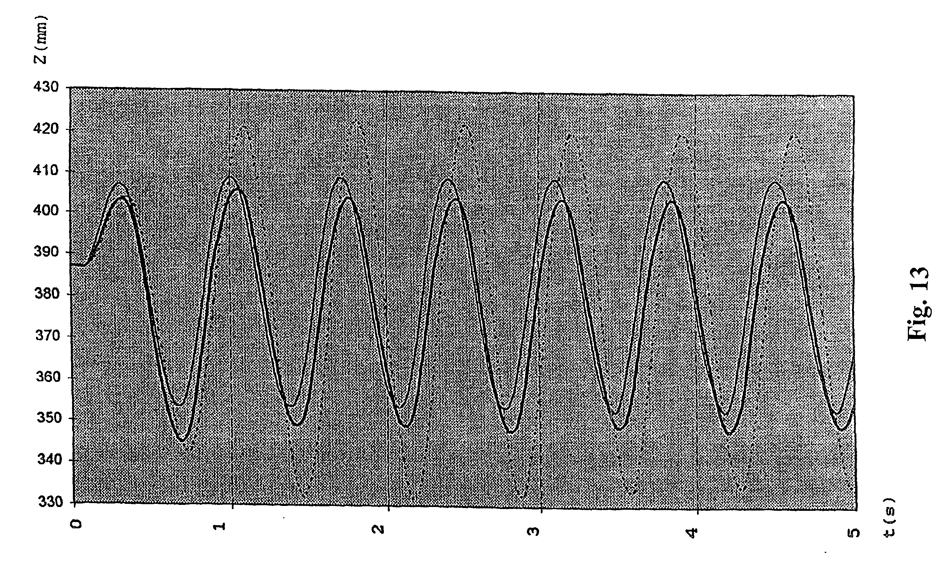

Fig. 13 shows a time diagram of oscillations of the sprung mass with sinusoidal external excitations with an amplitude of 20 mm and a repetition frequency approximately equal to the natural cyclic frequency of free oscillations of the sprung mass.

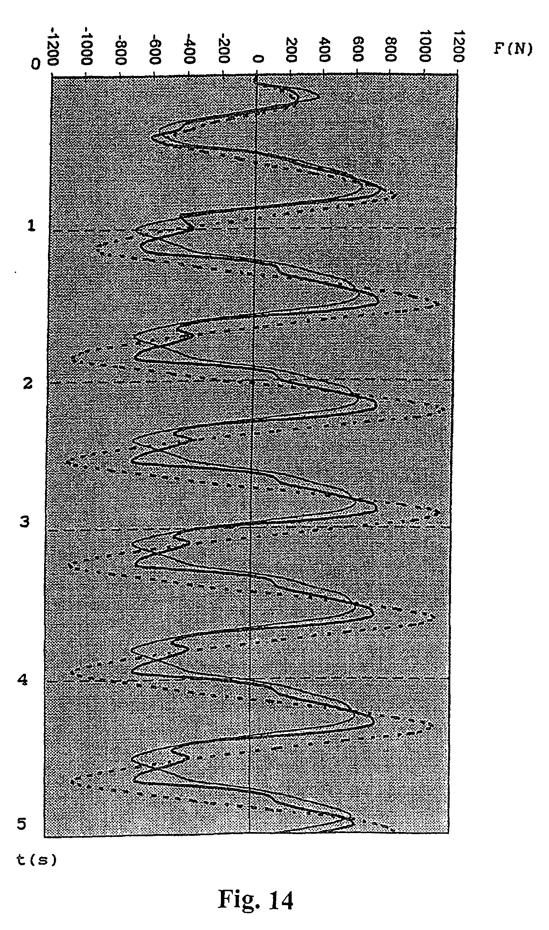

Fig. 14 shows a time diagram of the force acting on the sprung mass with sinusoidal external excitations with an amplitude of 20 mm and a repetition frequency approximately equal to the natural cyclic frequency of free oscillations of the sprung mass.

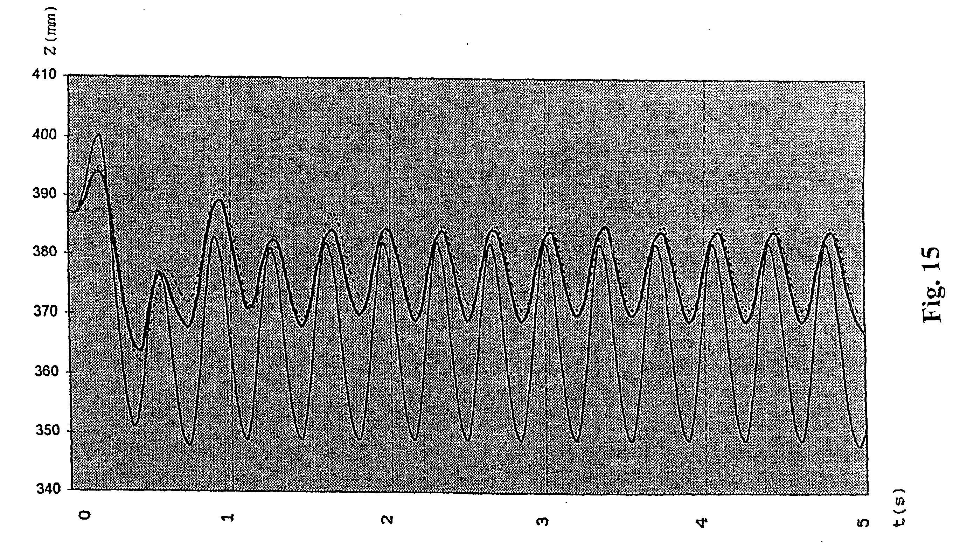

Fig. 15 shows a time diagram of oscillations of the sprung mass with sinusoidal external excitations with an amplitude of 20 mm and a repetition frequency approximately equal to twice the natural cyclic frequency of free oscillations of the sprung mass.

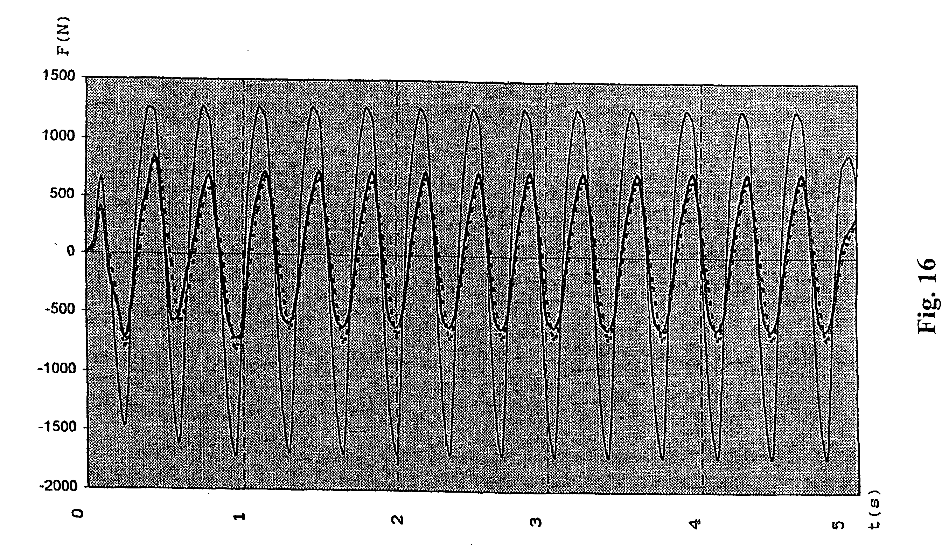

Fig. 16 shows a time diagram of the force acting on the sprung mass with sinusoidal external excitations with an amplitude of 20 mm and a repetition frequency approximately equal to twice the natural cyclic frequency of free oscillations of the sprung mass.

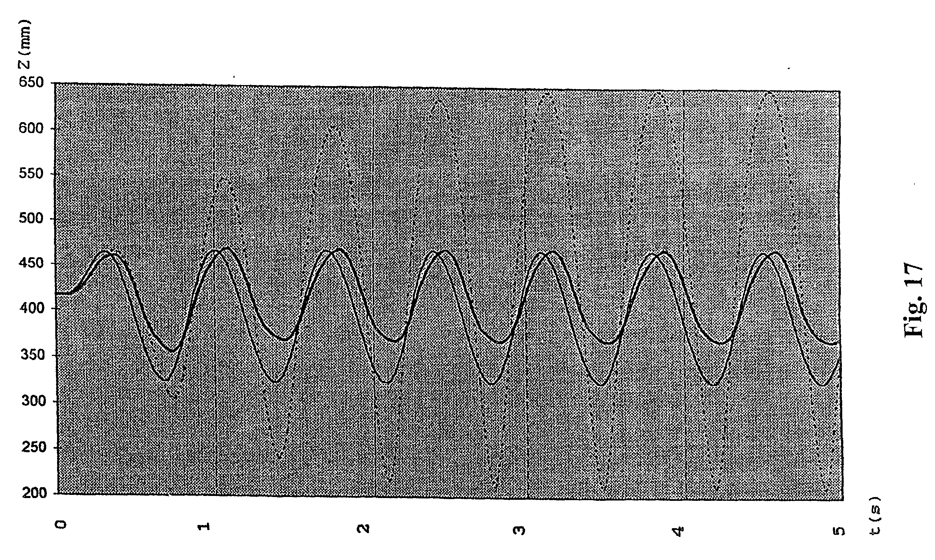

Fig. 17 shows a time diagram of oscillations of the sprung mass with sinusoidal external excitations with an amplitude of 50 mm and a repetition frequency approximately equal to the natural cyclic frequency of free oscillations of the sprung mass.

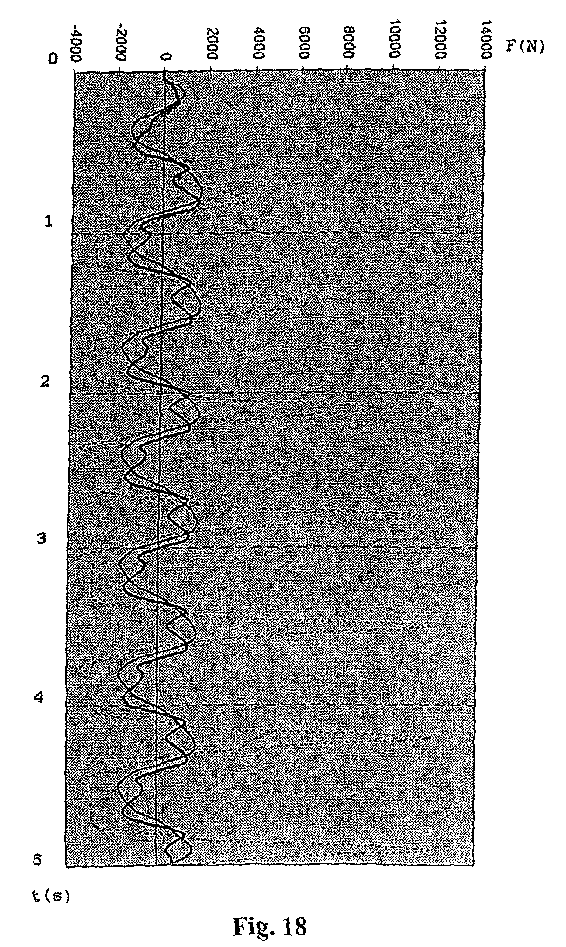

Fig. 18 shows a time diagram of the force acting on the sprung mass with sinusoidal external excitations with an amplitude of 50 mm and a repetition frequency approximately equal to the natural cyclic frequency of free oscillations of the sprung mass.

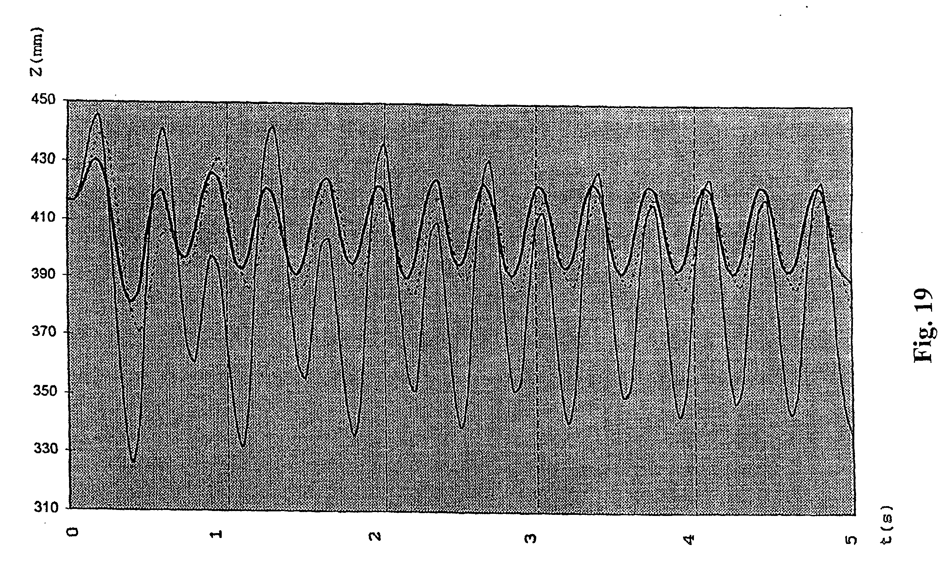

Fig. 19 shows a time diagram of oscillations of the sprung mass with sinusoidal external excitations with an amplitude of 50 mm and a repetition frequency approximately equal to twice the natural cyclic frequency of free oscillations of the sprung mass.

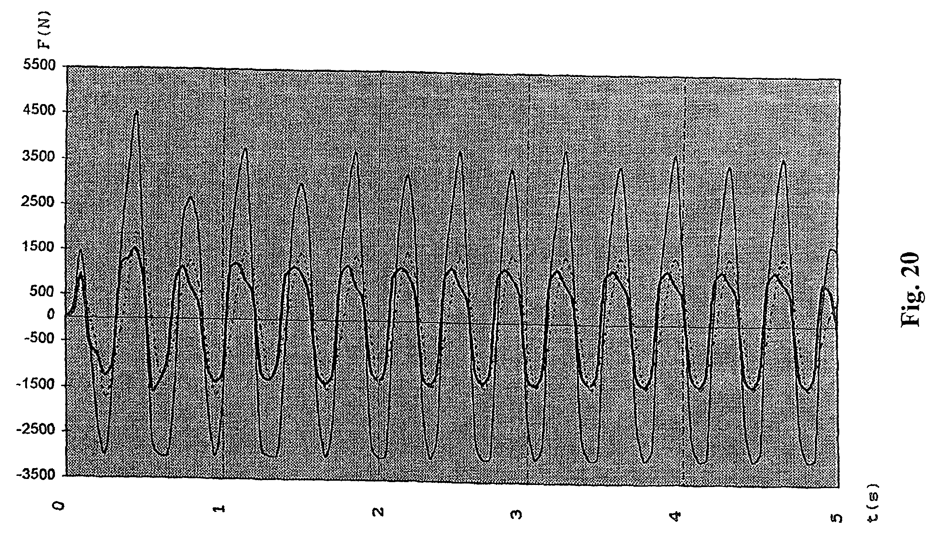

Fig. 20 shows a time diagram of the force acting on the sprung mass with sinusoidal external excitations with an amplitude of 50 mm and a repetition frequency approximately equal to twice the natural cyclic frequency of free oscillations of the sprung mass.

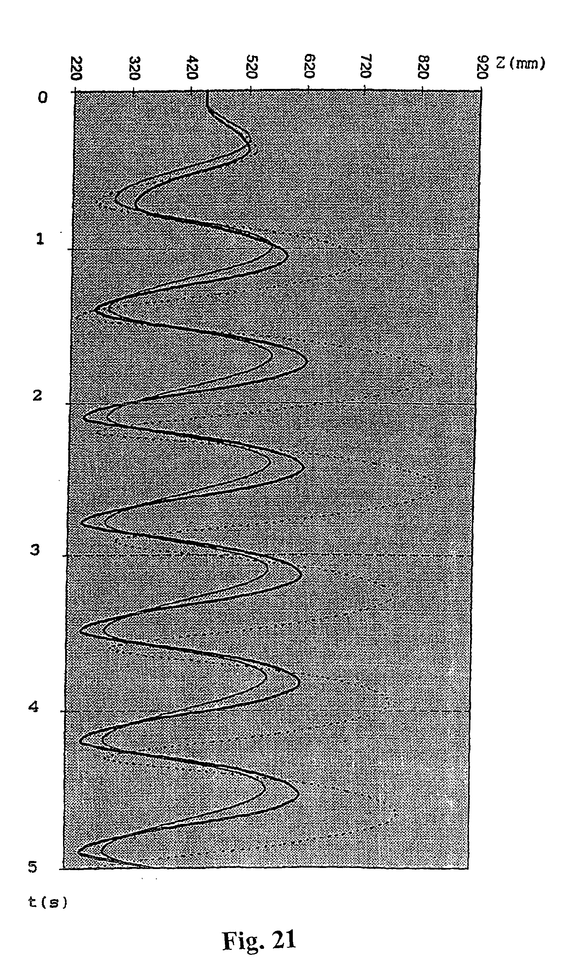

Fig. 21 shows a time diagram of oscillations of the sprung mass with sinusoidal external excitations with an amplitude of 80 mm and a repetition frequency approximately equal to the natural cyclic frequency of free oscillations of the sprung mass.

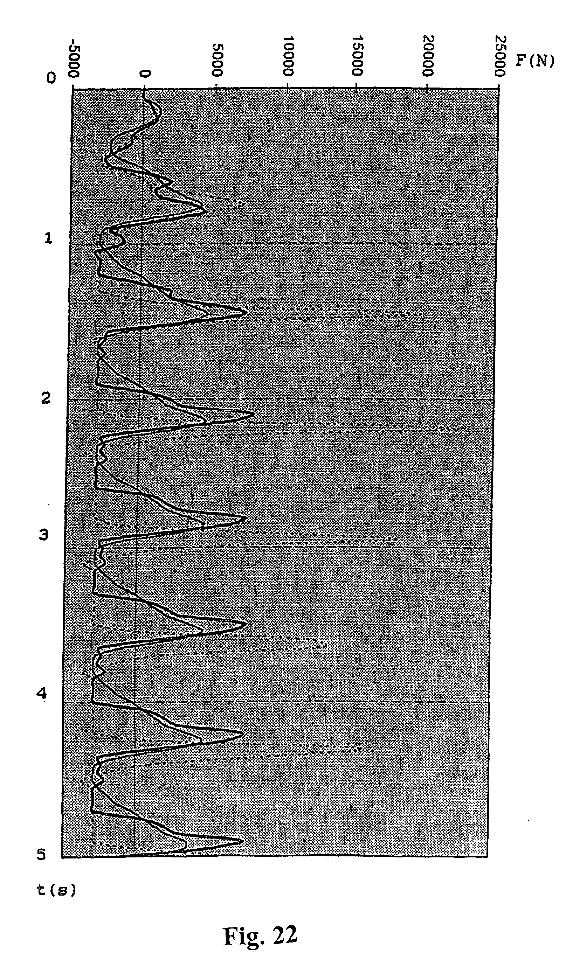

Fig. 22 shows a time diagram of the force acting on the sprung mass with sinusoidal external excitations with an amplitude of 80 mm and a repetition frequency approximately equal to the natural cyclic frequency of free oscillations of the sprung mass.

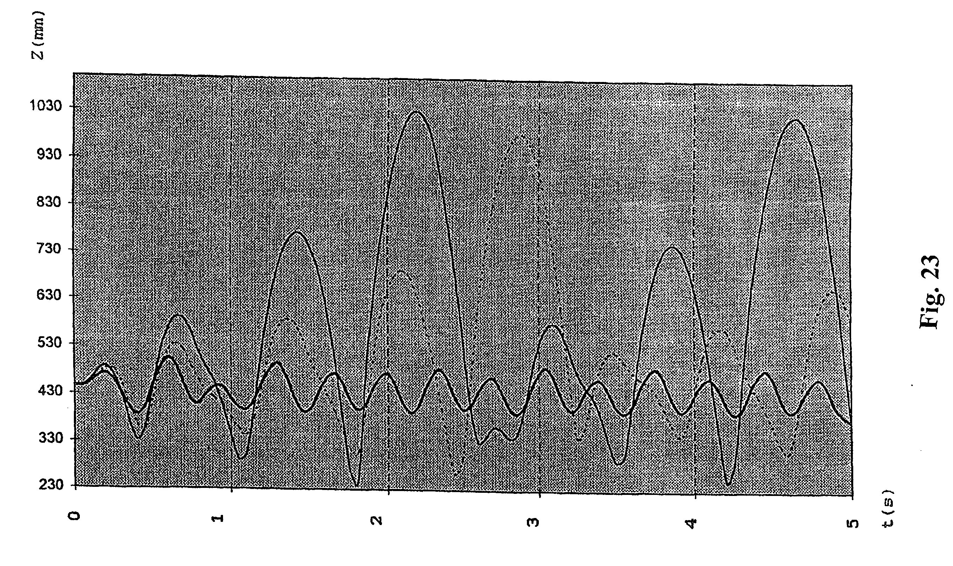

Fig. 23 shows a time diagram of oscillations of the sprung mass with sinusoidal external excitations with an amplitude of 80 mm and a repetition frequency approximately equal to twice the natural cyclic frequency of free oscillations of the sprung mass.

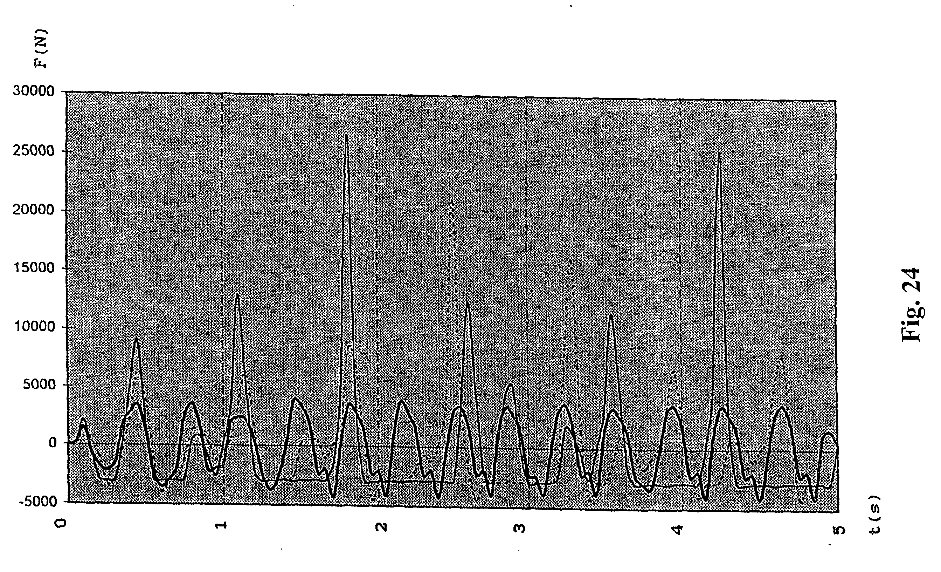

Fig. 24 shows a time diagram of the force acting on the sprung mass with sinusoidal external excitations with an amplitude of 80 mm and a repetition frequency approximately equal to twice the natural cyclic frequency of free oscillations of the sprung mass.

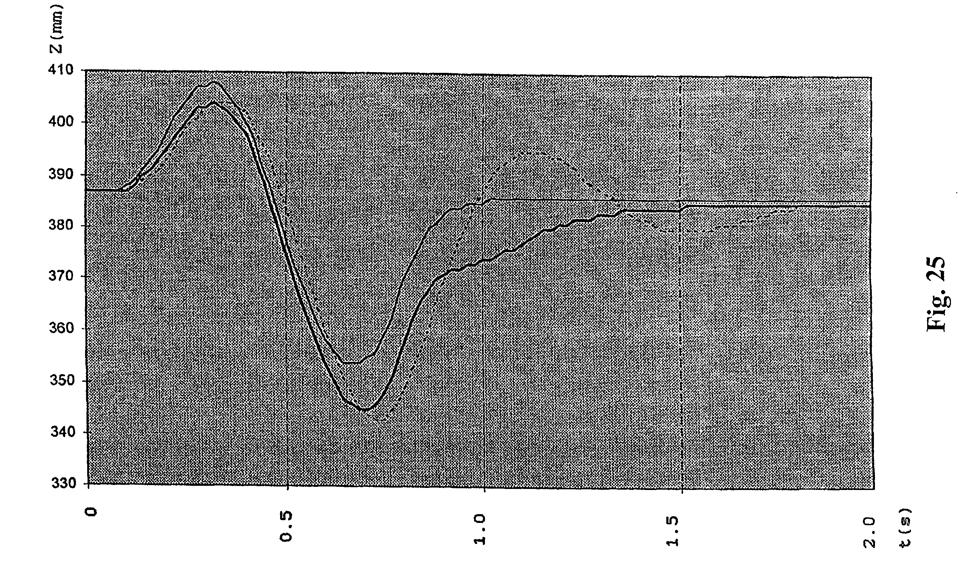

Fig. 25 shows a time diagram of oscillations of the sprung mass with a single external excitation of sinusoidal form with an amplitude of 20 mm and a duration approximately equal to the period of free oscillations of the sprung mass.

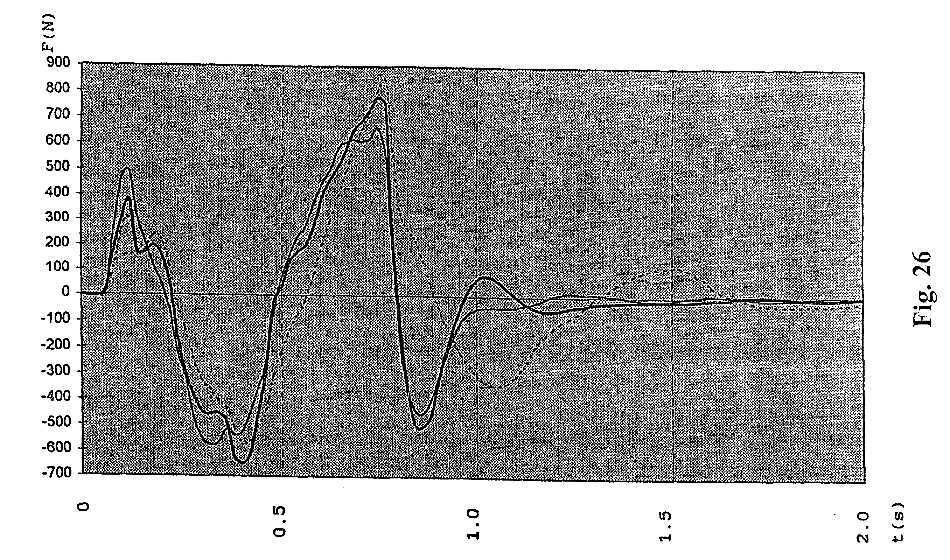

Fig. 26 shows a time diagram of the force acting on the sprung mass with a single external excitation of sinusoidal form with an amplitude of 20 mm and a duration approximately equal to the period of free oscillations of the sprung mass.

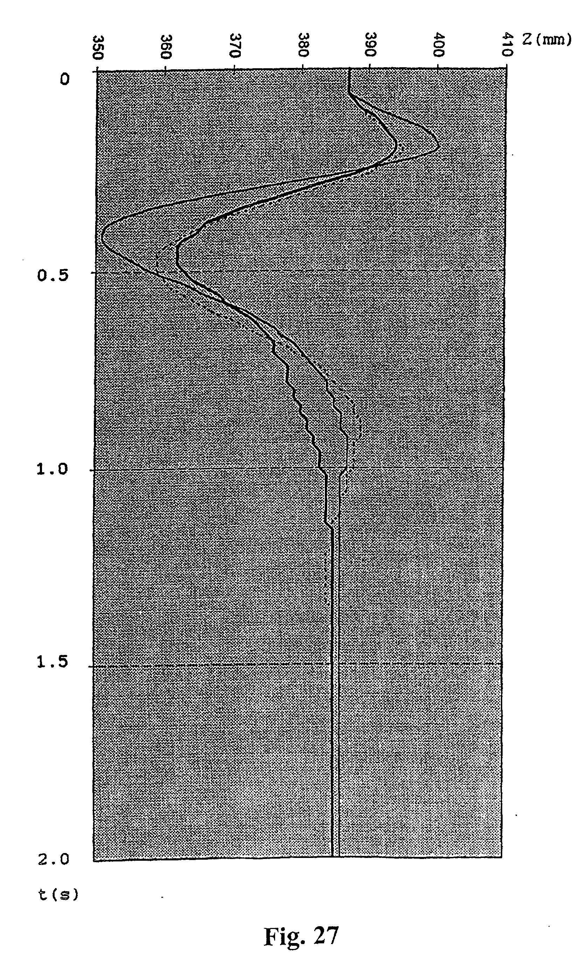

Fig. 27 shows a time diagram of oscillations of the sprung mass with a single external excitation of sinusoidal form with an amplitude of 20 mm and a duration approximately equal to one half the period of free oscillations of the sprung mass.

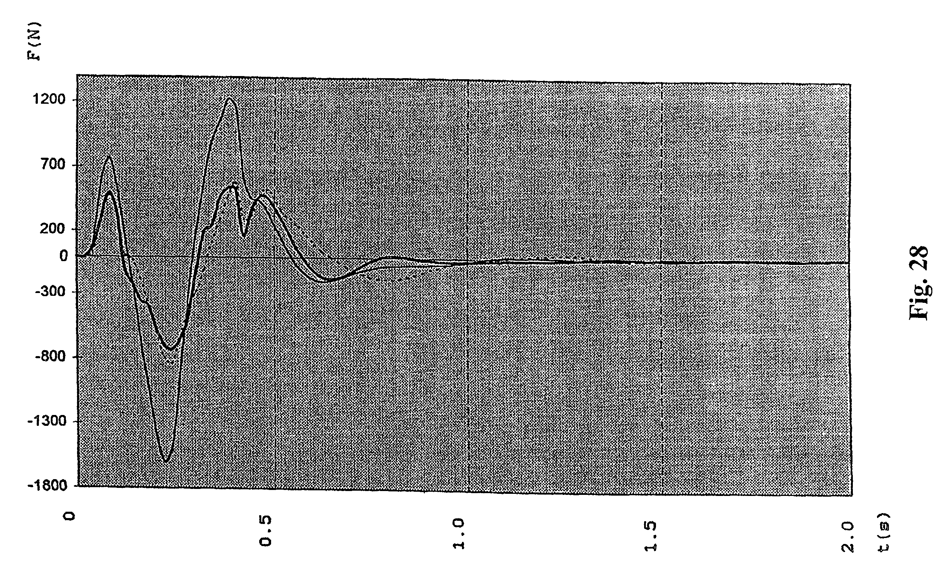

Fig. 28 shows a time diagram of the force acting on the sprung mass with a single external excitation of sinusoidal form with an amplitude of 20 mm and a duration approximately equal to one half the period of free oscillations of the sprung mass.

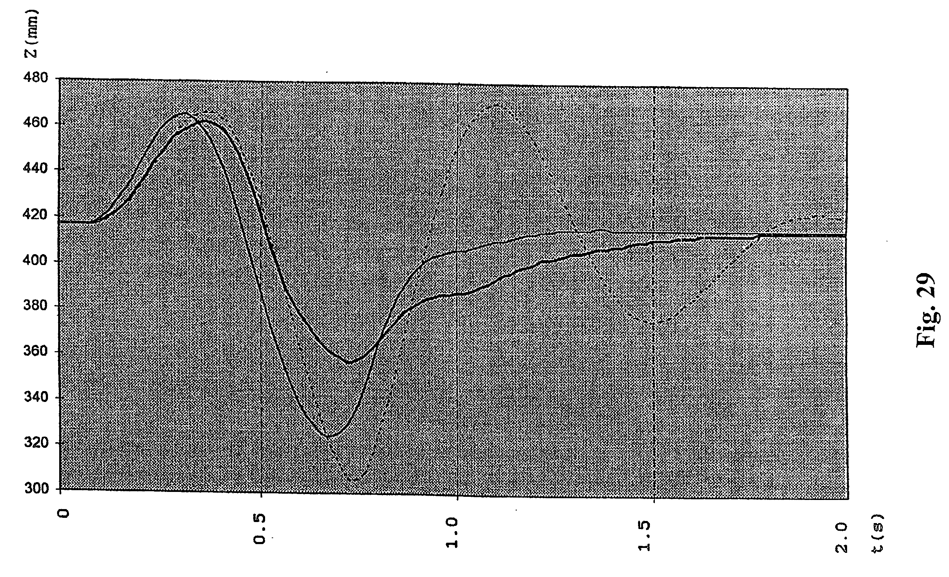

Fig. 29 shows a time diagram of oscillations of the sprung mass with a single external excitation of sinusoidal form with an amplitude of 50 mm and a duration approximately equal to the period of free oscillations of the sprung mass.

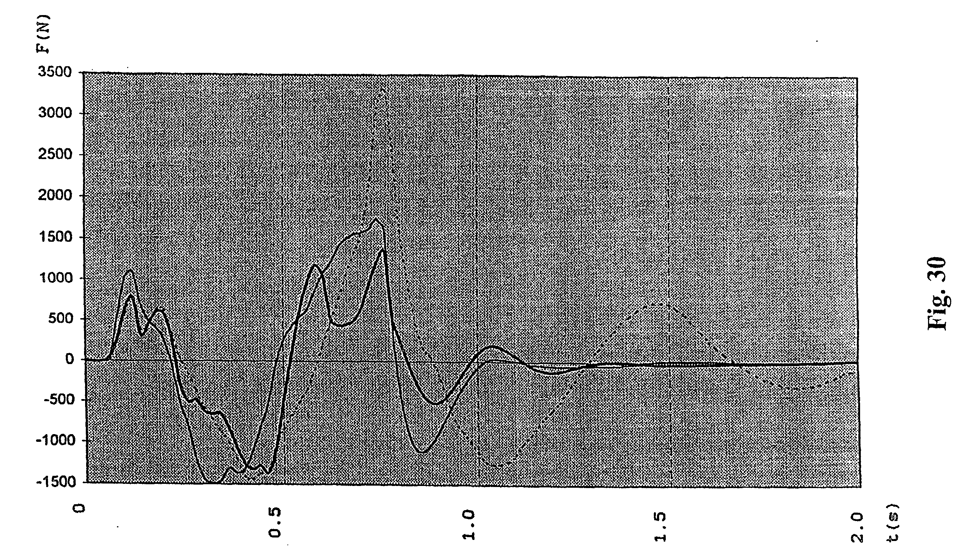

Fig. 30 shows a time diagram of the force acting on the sprung mass with a single external excitation of sinusoidal form with an amplitude of 50 mm and a duration approximately equal to the period of free oscillations of the sprung mass.

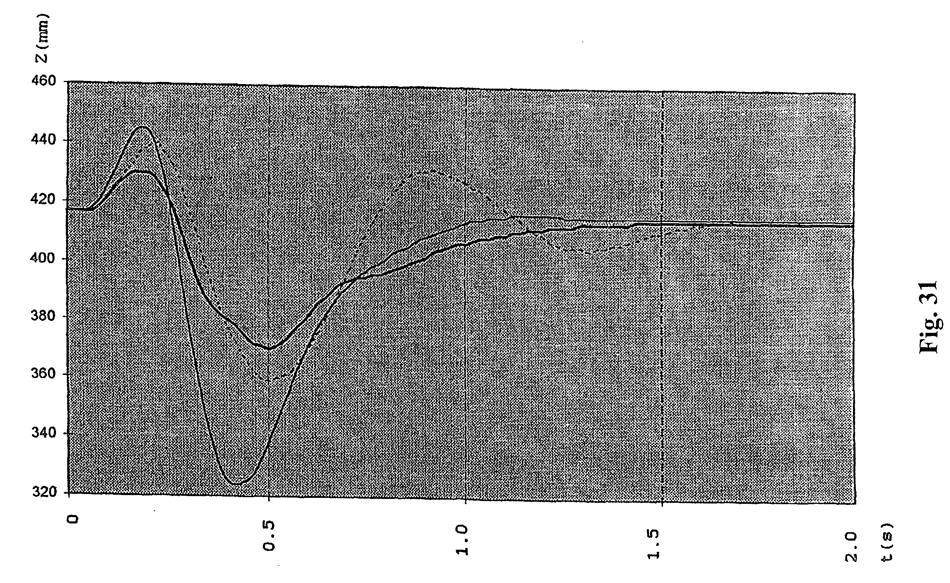

Fig. 31 shows a time diagram of oscillations of the sprung mass with a single external excitation of sinusoidal form with an amplitude of 50 mm and a duration approximately equal to one half the period of free oscillations of the sprung mass.

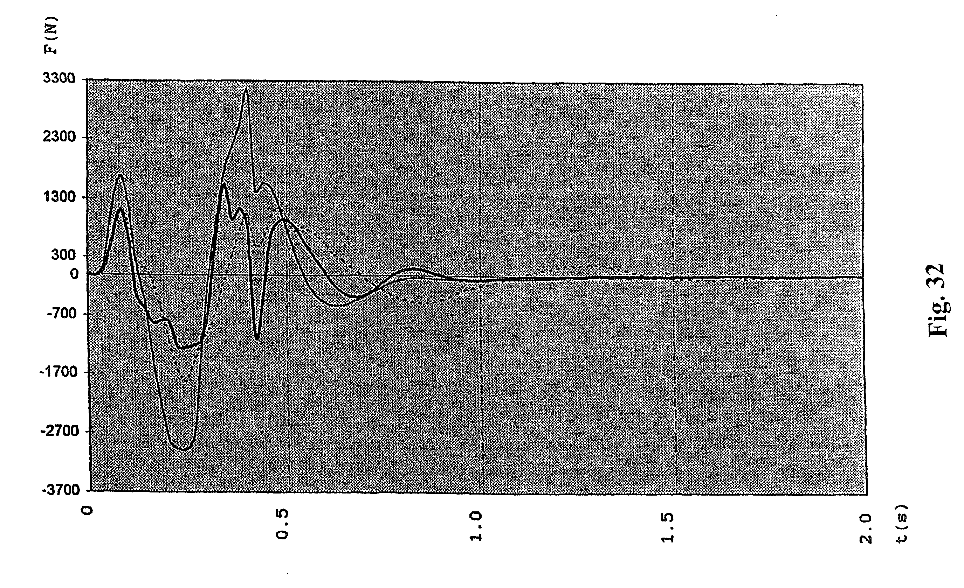

Fig. 32 shows a time diagram of the force acting on the sprung mass with a single external excitation of sinusoidal form with an amplitude of 50 mm and a duration approximately equal to one half the period of free oscillations of the sprung mass.

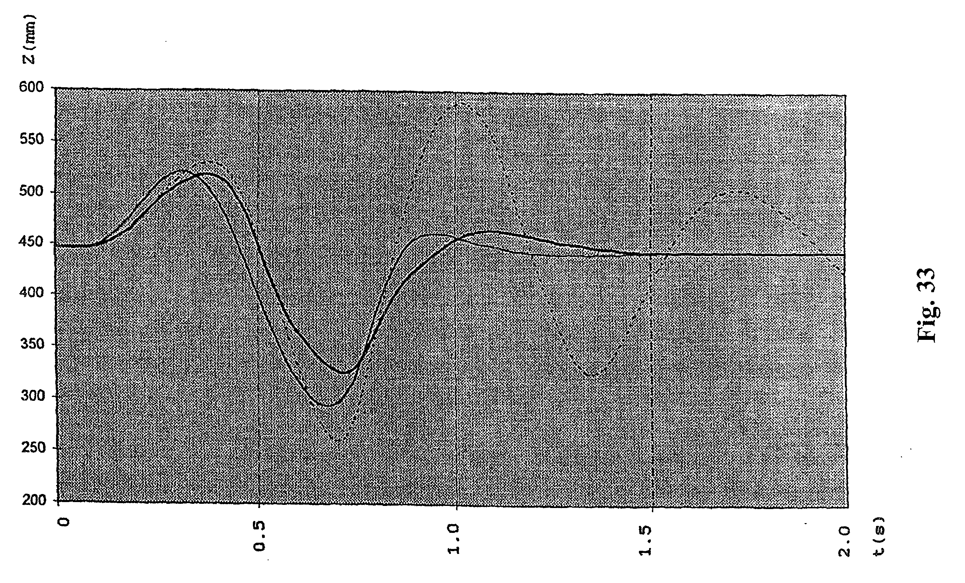

Fig. 33 shows a time diagram of oscillations of the sprung mass with a single external excitation of sinusoidal form with an amplitude of 80 mm and a duration approximately equal to the period of free oscillations of the sprung mass.

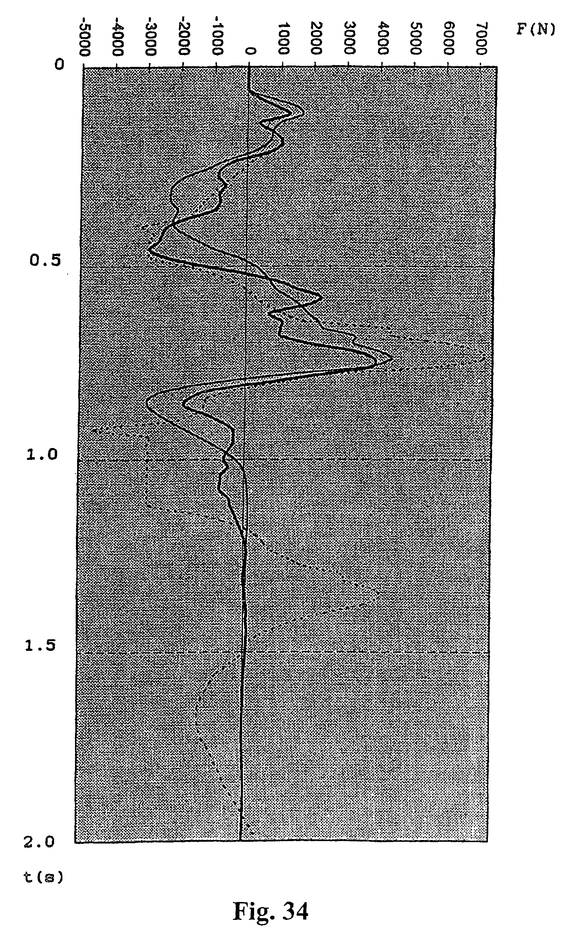

Fig. 34 shows a time diagram of the force acting on the sprung mass with a single external excitation of sinusoidal form with an amplitude of 80 mm and a duration approximately equal to the period of free oscillations of the sprung mass.

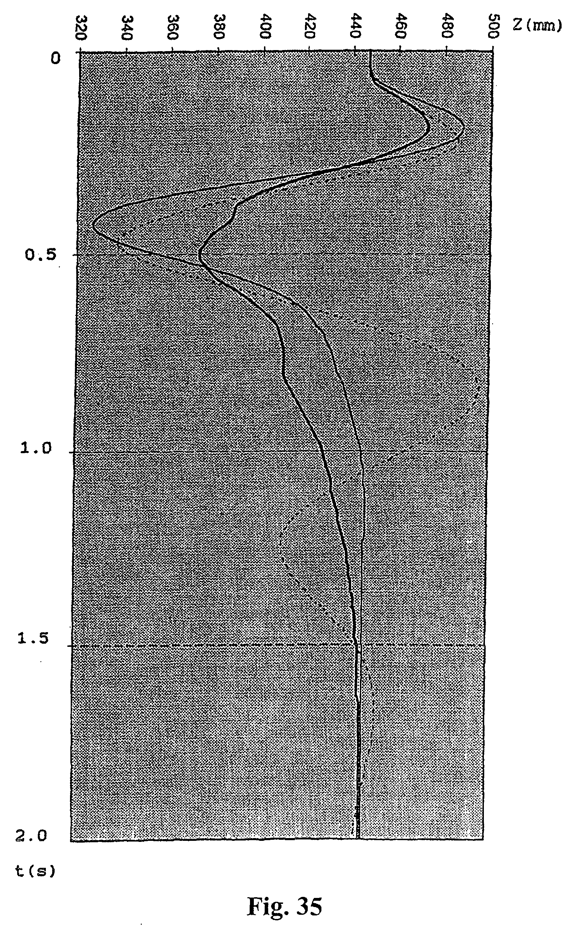

Fig. 35 shows a time diagram of oscillations of the sprung mass with a single external excitation of sinusoidal form with an amplitude of 80 mm and a duration approximately equal to one half the period of free oscillations of the sprung mass.

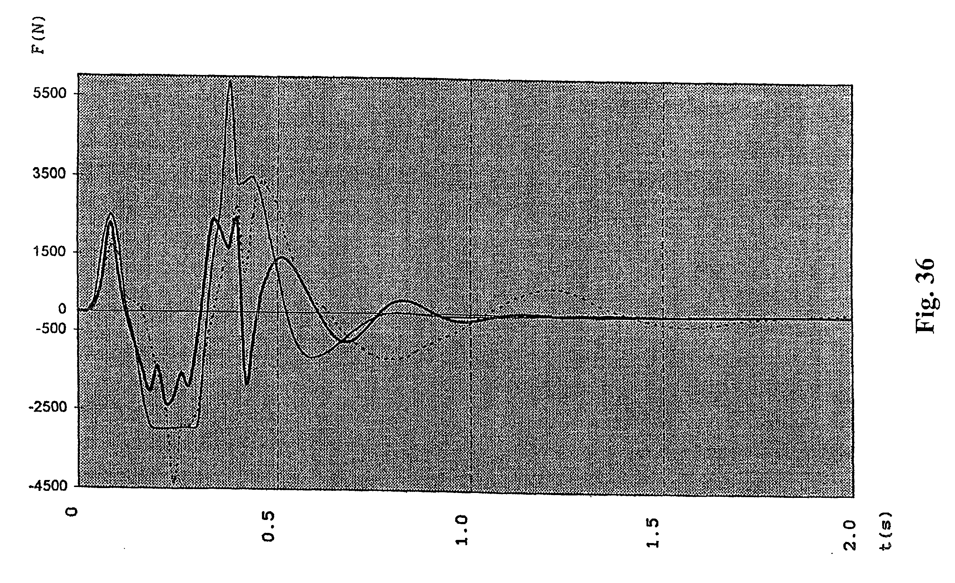

Fig. 36 shows a time diagram of the force acting on the sprung mass with a single external excitation of sinusoidal form with an amplitude of 80 mm and a duration approximately equal to one half the period of free oscillations of the sprung mass.

Variants for Carrying Out the Invention

The first main variant of the proposed method may be carried out in the following manner.. A piston of a damper is made of two elements. One aperture is made in the body of each of these elements. The apertures together form a constant restrictor. A structural element is included in the makeup of the damper. Control of the turn of one of the piston elements relative to the other piston element is effected by means of this structural element. During forward (return) movement of the piston in the working cylinder of the damper, the magnitude of the cross section of the slit of the compression (expansion) valve is changed in direct proportion to the value of the excessive pressure of the working liquid in the compression (expansion) chamber. In order to accomplish this, the force with which the excessive pressure acts on the plate of the compression (expansion) valve is balanced by the oppositely directed elastic force of the elastic element of that valve. Furthermore, by means of the structural element which controls the turn of one of the piston elements, movement of the piston is converted into a turn of that piston element relative to the other piston element. Wherewith, each position of the piston in the damper sets in accordance therewith an angle of turn of the piston elements relative to each other. And each such angle of turn sets in accordance therewith a degree of closure, by the movable element, of the aperture forming the constant restrictor and made in the other element of the piston. Thus each angle of turn of the piston elements relative to one another sets accordingly the magnitude of the flow cross section of the constant restrictor.

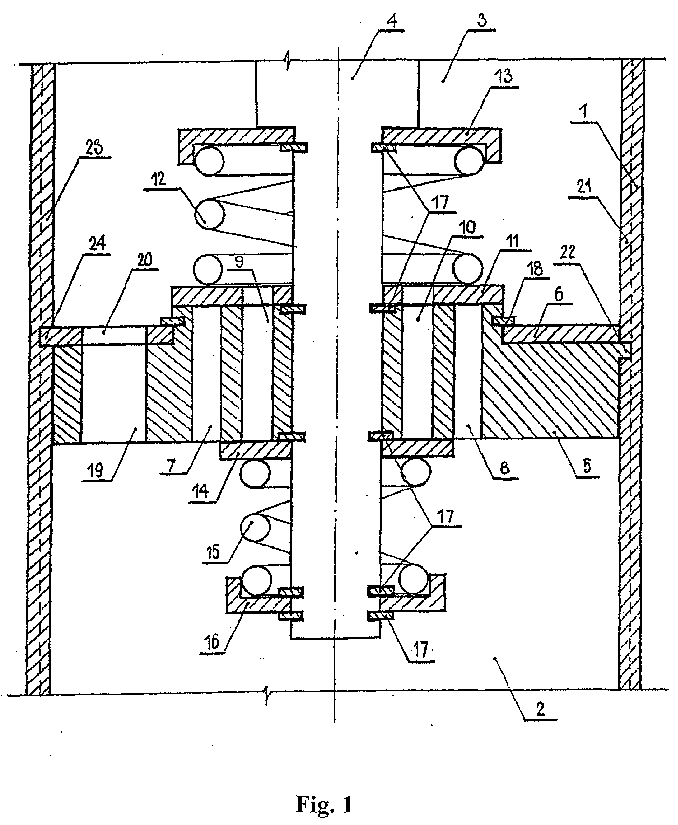

A device which is shown in Fig. 1 may be used to carry out the first main variant of the proposed method. This device is a liquid damper. The device has a cylindrical body (1), which simultaneously is the working cylinder of the damper, a compression chamber (2) and expansion chamber (3), which are formed as a result of dividing the damper cavity with a piston. The piston is secured to an end of a rod (4) and consists of two elements, element (5) and element (6). Both of these piston elements have the possibility of separately turning about the longitudinal axis of the damper. Apertures (7) and (8), which form a supply channel of a compression valve, and apertures (9) and (10), which form a supply channel of an expansion valve, are made in the body of the element (5). The compression valve includes a plate (11), which closes the apertures (7) and (8), an elastic element (12) and a support (13) for the elastic element. The expansion valve includes a plate (14), which closes the apertures (9) and (10), an elastic element (15) and a support (16) of the elastic element. Parts of the valves and the element (5) are secured on the rod (4) by retaining rings (17). The element (6) is secured on the element (5) by the retaining ring (18). An aperture (19) is made in the body of the element (5). An aperture (20) is made in the body of the element (6). The apertures (19) and (20) form a constant restrictor which couples the compression chamber (2) and the expansion chamber (3). Two longitudinal guides are made on the inner surface of the body (1) on the section coinciding with the piston stroke. A guide (21) is made rectilinear and via a side protrusion (22) of the element (5) interacts with the element (5). A guide (23) is made helical and via a side protrusion (24) of the element (6) interacts with the element (6). At each point of the piston stroke, the central angle between the guide (21) and the guide (23) sets the angle of turn of the element (6) relative to the element (5). In the middle section of the piston stroke, which in this device corresponds to the maximum flow cross section of the constant restrictor, the central angle between the guide (21) and the guide (23) is equal to 180 degrees. The apertures (19) and (20) have identical angular dimensions and identical minimum and maximum radial spacing from the longitudinal axis of the damper. In element (5) the central angle between the protrusion (22) and the center of the aperture (19) is equal to 180 degrees. There is no such central angle in the element (6).

In the position of static balance, when the weight of the sprung mass of the vehicle is balanced by the elastic force of the elastic element of the suspension, the piston of the damper is in the middle of its stroke section. At that point of the piston stroke section, the value of the central angle between the guide (21) and the guide (23) is 180 degrees. Wherein, the position of the aperture (19) and the position of the aperture (20) completely coincide, and the magnitude of the flow cross section of the constant restrictor is maximum. In the position of static balance, there is no excessive pressure of the working liquid in the cavities of the damper and the compression and expansion valves are closed. During compression (expansion) of the suspension of the vehicle, forward (return) movement of the piston in the body (1) takes place, and an excessive pressure of the working liquid is produced in the compression (2) (expansion [3]) chamber. Under the effect of this pressure, the working liquid flows through the constant restrictor from the compression (2) (expansion [3]) chamber into the expansion (3) (compression [2]) chamber. At the same time, the excessive pressure acts on the plate (11) (plate [14]) of the compression (expansion) valve and causes movement of that plate and elastic deformation of the elastic element (12) (elastic element [15]). The elastic force of the elastic element which is produced thereby compensates the force with which the excessive pressure acts on the plate (11) (plate [14]). As a result, the plate of the valve is fixed at some position. This position of the plate determines the size of the cross section of the slit of that valve, corresponding to the current value of the excessive pressure. Furthermore, when the piston moves along the body (1), the element (6) turns relative to the element (5) as a result of the interaction of those elements with the guides (23) and (21). The angle of that turn at each point of the piston stroke section is determined by the value of the central angle between the guide (21) and the guide (23). Wherewith, the aperture (20) is shifted relative to the aperture (19) by that same angle and a change in the flow cross section of the constant restrictor occurs.

The third main variant of the proposed method may be carried out in the following manner. The piston of the damper is made of three elements. Two apertures, positioned at different distances from the longitudinal axis of the damper, are made in the body of each of those piston elements. The apertures of the three elements that are spaced at the greatest distance from the longitudinal axis of the damper are used as a supply channel of the compression valve. The apertures which are spaced at the smallest distance from the longitudinal axis of the damper are used as the supply channel of the expansion valve. The makeup of the damper includes a structural element, by means of which control of the turn of the outer elements of the piston relative to the element positioned in the middle of the piston is effected. During forward (return) movement of the piston in the working cylinder of the damper, the size of the cross section of the slit of the compression (expansion) valve is changed in direct proportion to the value of the excessive pressure of the working liquid in the compression (expansion) chamber. For this, the force with which the excessive pressure acts on the plate of the compression (expansion) valve is balanced by the oppositely directed elastic force of the elastic element of that valve. Furthermore, by means of the structural element which effects control by turning the outer elements of the piston, movement of the piston is converted into a turn of one outer element of the piston relative to the middle element of the piston, and also into a turn of the other outer element of the piston relative to the middle element of the piston. Wherein, each position of the piston in the damper sets in accordance therewith an angle of turn of one outer piston element relative to the middle piston element and an angle of turn of the other outer piston element relative to the middle piston element. The angle of turn of the piston element positioned at the side of the expansion chamber sets in accordance therewith the degree of closure of the apertures forming the supply channel of the compression valve, and accordingly the magnitude of the flow cross section of that channel. The angle of turn of the piston element positioned at the side of the compression chamber set in accordance therewith the degree of closure of the apertures forming the supply channel of the expansion valve, and accordingly the magnitude of the flow cross section of that channel.

The fifth main variant of the proposed method is carried out in a manner similar to that of the third main variant and has the following additional features as compared with the third variant. All of the apertures forming the supply channels of the compression and expansion valves are made in the form of sectors of a ring. One radial side of each of the apertures made in the middle element of the piston is limited by a protrusion. This protrusion passes through the outlet aperture of the supply channel of the compression (expansion) valve and together with the surface of the outer element of the piston, which limits this outlet aperture, forms the seat of the compression (expansion) valve. When an outer element of the piston turns relative to the middle element of the piston, not only the degree of closure of the apertures forming the supply channel of a corresponding valve and the flow cross section of that channel are changed, but also the area limited by the seat of that valve. Thus, each angle of turn of an outer piston element sets in accordance therewith the force with which the excessive pressure of the working liquid acts on the plate of a valve, and accordingly the magnitude of the cross section of the slit of that valve at a constant excessive pressure.

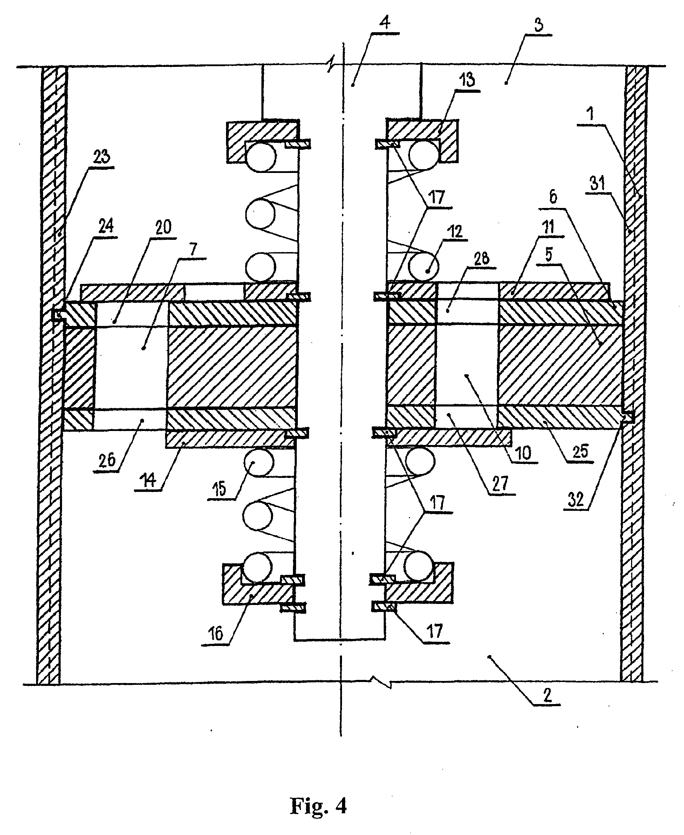

The device which is shown in Fig. 4 may be used in order to carry out the third and fifth main variants of the proposed method. This device is a liquid damper. The device has a cylindrical body (1), which at the same time is the working cylinder of the damper, compression (2) and expansion (3) chambers, which are formed as a result of dividing the cavity of the damper with a piston. The piston is secured to an end of a rod (4) and consists of three elements, element (5), element (25) and element (6). All three piston elements have the possibility of separately turning about the longitudinal axis of the damper. Apertures (20), (7) and (26), which form the supply channel of the compression valve, and apertures (27), (10) and (28), which form the supply channel of the expansion valve, are made in the bodies of those piston elements. All of these apertures have the form of a sector of a ring. The compression valve includes a plate (11), which covers the aperture (20), an elastic element (12), and a support (13) of the elastic element. The expansion valve includes a plate (14) which covers the aperture (27), an elastic element (15) and a support of the elastic element (16). The parts of the valves and the piston elements are secured on a rod (4) by retaining rings (17). The aperture (7) is limited on one radial side by a protrusion (29) which passes through the aperture (20) and together with a surface of the piston element (6) forms a seat of the compression valve. The aperture (10) is limited on one radial side by a protrusion (30) which passes through the aperture (27) and together with a surface of the piston element (25) forms a seat of the expansion valve. Three longitudinal guides are made on the section of the inner surface of the body (1), which coincides with the stroke of the piston. A guide (21) is made rectilinear and via a side protrusion (22) of the element (5) interacts with the element (5). A guide (23) is made helical and via side protrusion (32) of the element (25) interacts with the element (25). A guide (31) is made helical and via side protrusion (32) of element (25) interacts with element (25). At each point of the piston stroke the central angle between the guide (23) and the guide (21) sets the angle of turn of the element (6) relative to the element (5), and the central angle between the guide (31) and the guide (21) sets the angle of turn of the element (25) relative to the element (5). In the middle section of the piston stroke, which in this device corresponds to the maximum flow cross section of the supply channels of the compression and expansion valves, the central angles between the guides (23) and (21) and between the guides (31) and (21) are equal to 90 degrees. The apertures (20), (7) and (26) have identical minimum and maximum spacing from the longitudinal axis of the damper. The apertures (28), (10) and (27) also have identical minimum and maximum spacing from the longitudinal axis of the damper. Wherewith the minimum distance of the apertures of the first group is greater than the maximum distance of the apertures of the second group. When the piston is in the middle section of its stroke, the apertures (20) and (7) and the apertures (27) and (10) coincide. Wherein, the flow cross sections of the supply channels of the compression and expansion valves are maximum. The area of the seat of the compression valve and the area of the seat of the expansion valve also have maximum values in that position of the piston.

In the position of static balance, when the weight of the sprung mass of the vehicle is balanced by the elastic force of the elastic element of the suspension, the piston of the . damper is in the middle of its stroke section. At that point of the piston stroke section, the central angles between the guide (21) and the guide (23) and between the guide (31) and the guide (21) are equal to 90 degrees. Wherein, the position of the aperture (7) and the position of the aperture (20) coincide, and the magnitude of the flow cross section of the supply channel of the compression valve is maximum. The position of the aperture (10) and the position of the aperture (27) also coincide and the magnitude of the flow cross section of the supply channel of the expansion valve is maximum. Furthermore, in that position of the piston the area of the compression valve seat and the area of the expansion valve seat have their maximum values. In the position of static balance, there is no excessive pressure of the working liquid in the cavities of the damper and the compression and expansion valves are closed. During compression (expansion) of the suspension of the vehicle, forward (return) movement of the piston in the body (1) takes place, and an excessive pressure of the working liquid is produced in the compression (2) (expansion [3]) chamber. The excessive pressure acts on the plate (11) (plate [14]) of the compression (expansion) valve and causes movement of that plate and elastic deformation of the elastic element (12) (elastic element [15]). The elastic force of the elastic element which is produced thereby compensates the force with which the excessive pressure acts on the plate (11) (plate [14]). As a result, the plate of the valve is fixed at some position. This position of the plate determines the size of the cross section of the slit of that valve, corresponding to the current value of the excessive pressure. Furthermore, when the piston moves along the body (1), the element (6) turns relative to the element (5) and the element (25) relative to the element (5) as a result of the interaction of those elements with the guides (23), (21) and (31). The angles of those turns at each point of the piston stroke section are determined by the value, respectively, of the central angle between the guide (23) and the guide (21) and the central angle between the guide (31) and the guide (21). Wherewith, the aperture (20) is shifted relative to the aperture (7) and a change occurs in the flow cross section of the supply channel of the compression valve, while the aperture (27) is shifted relative to the aperture (10) and a change in the flow cross section of the supply channel of the expansion valve occurs. Furthermore, movement of the protrusion (29) into the aperture (20) and movement of the protrusion (30) into the aperture (27) take place. As a result, a change of the area of the seat of the compression valve and of the area of the seat of the expansion valve occurs. The change of the area of the seat of the compression valve results in a change in the force with which the excessive pressure in the compression chamber (2) acts on the plate (11), which in turn results in a change in the height of the slit of the compression valve and, accordingly, to a change in the cross section of that slit. A change in the area of the seat of the expansion valve results in a change of the force with which the excessive pressure in the expansion chamber (3) acts on the plate (14), which in turn results in a change in the height of the slit of the expansion valve, and, accordingly, a change in the cross section of that slit. The increased angular size of the aperture (26) for any possible angle of turn of the element (25) relative to element (5) ensures the supply of such an amount of working liquid into the supply channel of the compression valve that corresponds to the maximum flow cross section of the compression valve. The increased angular size of the aperture (28) for any possible angle of turn of the element (6) relative to element (5) ensures the supply of an amount of working liquid into the supply channel of the expansion valve that corresponds to the maximum flow cross section of the expansion valve.

The second main variant of the proposed method may be carried out in the following manner. The damper piston includes a movable gate which as a result of its displacement relative to the piston closes the aperture forming the constant restrictor. The damper includes a structural element by means of which control of the displacement of the movable gate relative to the piston is carried out. During forward (return) movement of the piston in the working cylinder of the damper, the size of the cross section of the slit of the compression (expansion) valve is changed in direct proportion to the value of the excessive pressure of the working liquid in the compression (expansion) chamber. For this, the force with which the excessive pressure acts on the plate of the compression (expansion) valve is balanced by the oppositely directed elastic force of the elastic element of that valve. Furthermore, by means of the structural element, which controls displacement of the movable gate, movement of the piston is converted into displacement of the movable gate relative to the piston. Wherein, each position of the piston in the damper sets in accordance therewith a position of the gate relative to the piston. And each such gate position sets in accordance therewith a value of closure of the aperture, forming the constant restrictor, in accordance therewith, and, accordingly, a magnitude of the flow cross section of the constant restrictor.

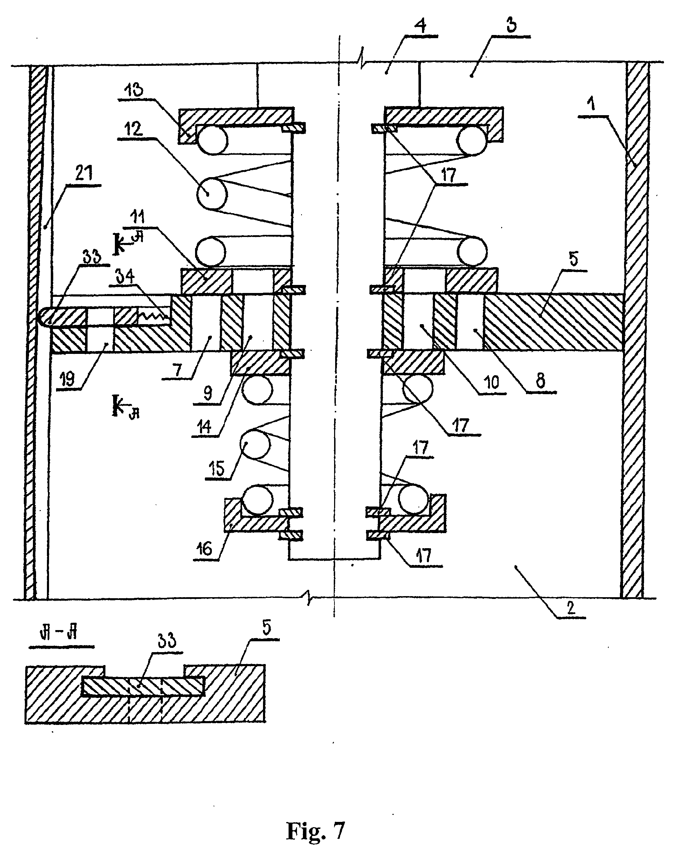

The device which is shown in Fig. 7 may be used in order to carry out the second main variant of the proposed method. This device is a liquid damper. The device has a cylindrical body (1), which at the same time is the working cylinder of the damper, compression (2) and expansion (3) chambers, which are formed as a result of dividing the cavity of the damper with a piston. The piston is secured to an end of a rod (4) and consists of a main element (5) and a movable gate (33). The movable gate (33) is positioned in a recess of the main piston element (5) and has the possibility of moving along that recess. Apertures (7) and (8), which form the supply channel of the compression valve, and apertures (9) and (10), which form the supply channel of the expansion valve, are made in the body of the element (5). The compression valve includes a plate (11), which covers the aperture (7) and (8), an elastic element (12), and a support (13) of the elastic element. The expansion valve includes a plate (14) which covers the apertures (9) and (10), an elastic element (15) and a support of the elastic element (16). The valve parts and the element (5) are secured on the rod (4) by retaining rings (17). An aperture (19), which forms a constant restrictor coupling the compression chamber (2) and the expansion chamber (3), is made in the body of the element (5). A rectilinear longitudinal guide (21), which interacts with the gate (33) is made on the inner surface of the body (1) on the section coinciding with the stroke of the piston. In order to ensure a constant contact with the guide (21), the gate (33) is pressed against it by an elastic element (34). The guide (21) has a varying transverse profile. In each point of the stroke of the piston, the transverse profile of the guide (21) sets the position of the gate (33) relative to the piston element (5). On the middle section of the stroke of the piston, which in this case corresponds to the maximum flow cross section of the constant restrictor, the guide (21) has a transverse profile of maximum depth.

In the position of static balance, when the weight of the sprung mass of the vehicle is balanced by the elastic force of the elastic element of the suspension, the piston of the damper is in the middle of its stroke section. At that point of the piston stroke section, the guide (21) has a transverse profile of maximum depth.

Wherein the gate (33) completely opens the aperture (19) and the size of the flow cross section of the constant restrictor is maximum. In the position of static balance, there is no excessive pressure of the working liquid in the cavities of the damper and the compression and expansion valves are closed. During compression (expansion) of the suspension of the vehicle, forward (return) movement of the piston in the body (1) takes place, and an excessive pressure of the working liquid is produced in the compression (2) (expansion [3]) chamber, due to the action of which the working liquid flows through the constant restrictor from the compression (2) (expansion [3]) chamber into the expansion (3) (compression [2]) chamber. At the same time, the excessive pressure acts on the plate (11) (plate [14]) of the compression (expansion) valve and causes movement of that plate and elastic deformation of the elastic element (12) (elastic element [15]). The elastic force of the elastic element which is produced thereby compensates the force with which the excessive pressure acts on the plate (11) (plate [14]). As a result, the plate of the valve is fixed at some position which determines the size of the cross section of the slit of that valve, corresponding to the current value of the excessive pressure. Furthermore, when the piston moves along the body (1), the gate (33) moves relative to the piston element (5) as a result of the interaction of the gate with the guide (21). The magnitude of that movement in each point of the piston stroke section is determined by the transverse profile of the guide (21). Due to the movement, the gate (33) closes the aperture (19) with its body and a change in the flow cross section of the constant restrictor takes place.

The fourth main variant of the proposed method may be carried out in the following manner. The damper piston includes two movable gates, one of which as a result of its displacement relative to the piston closes the supply channel of the compression valve, while the other as a result of similar displacement closes the supply channel of the expansion valve. The damper includes a structural element by means of which control of the displacement of the movable gates relative to the piston is carried out. During forward (return) movement of the piston in the working cylinder of the damper, the size of the cross section of the slit of the compression (expansion) valve is changed in direct proportion to the value of the excessive pressure of the working liquid in the compression (expansion) chamber. For this, the force with which the excessive pressure acts on the plate of the compression (expansion) valve is balanced by the oppositely directed elastic force of the elastic element of that valve. Furthermore, by means of the structural element, which controls displacement of the movable gates, movement of the piston is converted into displacement of those movable gates relative to the piston. Wherein, each position of the piston in the damper sets in accordance therewith a position of the first (second) gate relative to the piston. And each such gate position sets in accordance therewith a value of closure of the supply channel of the compression (expansion) valve by the first (second) gate, and, accordingly, a magnitude of the flow cross section of the supply channel of the compression (expansion) valve.

The sixth main variant of the proposed method is carried out in a manner similar to the manner in which the fourth main variant is carried out with the following additional features. The apertures which form the supply channels of the compression and expansion valves are made in the form of rectangles. The movable gates are provided with protrusions which pass through the apertures of the supply channels to the opposite side of the piston and together with the surface of the piston, limiting the aperture of the supply channel, form seats of the compression and expansion valves. When the first (second) gate is moved relative to the piston, not only the flow cross section of the supply channel of the compression (expansion) valve is changed, but also the area limited by the seat of that valve. Thus, each position of the first (second) movable gate relative to the piston sets in accordance therewith a force with which the excessive pressure of the working liquid acts on the plate of the compression (expansion) valve, and, accordingly the magnitude of the cross section of the slit of that valve for a constant excessive pressure.

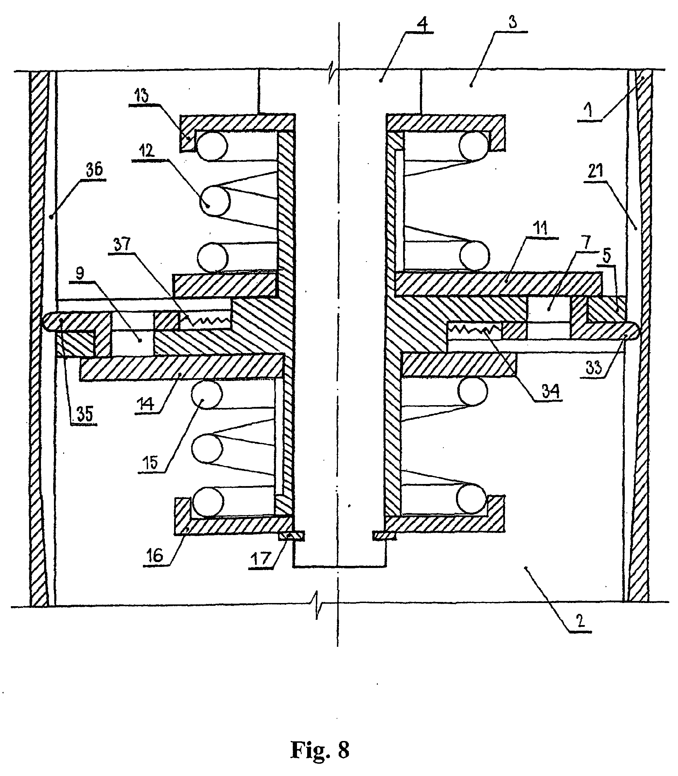

The device shown in Fig. 8 may be used to carry out the fourth and sixth main variants of the proposed method. This device is a liquid damper. The device has a cylindrical body (1), which at the same time is the working cylinder of the damper, a compression chamber (2) and an expansion chamber (3), which are formed as a result of dividing the cavity of the damper with a piston. The piston is secured to an end of the rod (4) and consists of a main element (5), a movable gate (33) and a movable gate (35). The movable gates (33) and (35) are positioned in recesses of the main piston element (5) and have the possibility of moving along those recesses. An aperture (7), which forms a supply channel of the compression valve, and an aperture (9), which forms a supply channel of the expansion valve, are made in the body of the element (5). The compression valve includes a plate (11), which closes the aperture (7), an elastic element (12) and a support (13) of the elastic element. The expansion valve includes a plate (14), which closes the aperture (9), an elastic element (15) and a support (16) of the elastic element. Longitudinal slots, which prevent the plates (11) and (14) from turning relative to the element (5), are made in the shanks of the piston (5). The parts of the valves and the piston are secured on the rod (4) by a retaining ring (17). A rectilinear longitudinal guide (21), which interacts with the gate (33), and a rectilinear guide (36), which interacts with the gate (35), are made on the inner surface of the body (1) on the section coinciding with the stroke of the piston. In order to ensure a constant contact with the guides (21) and (36), the gates (33) and (35) are pressed against them by the elastic elements (34) and (37). The guides (21) and (36) have a varying transverse profile. At each point of the stroke of the piston, the transverse profile of the guide (21) sets a position of the gate (33) relative to the piston element (5). At each point of the stroke of the piston, the transverse profile of the guide (36) sets a position of the gate (35) relative to the piston element (5). At the middle section of the stroke of the piston, which in this device corresponds to the maximum flow cross section of the compression (expansion) channel with the compression (expansion) valve completely open, the guides (21) and (36) have a transverse profile of maximum depth. The gate (33) has a protrusion which passes through the aperture (7) and together with the surface of the element (5) forms a seat of the compression valve. The gate (35) has a protrusion which passes through the aperture (9) and together with the surface of the element (5) forms a seat of the expansion valve.

In the position of static balance, when the weight of the sprung mass of the vehicle is balanced by the elastic force of the elastic element of the suspension, the piston of the damper is in the middle of its stroke section. At that point of the piston stroke section, the guides (21) and (36) have a transverse profile of maximum depth. Wherein the gates (33) and (35) completely open the apertures (7) and (9). In that position the flow cross sections of the supply channels of the compression and expansion valves, and also the areas of the seats of those valves are maximum. In the position of static balance, there is no excessive pressure of the working liquid in the cavities of the damper and the compression and expansion valves are closed. During compression (expansion) of the suspension of the vehicle, forward (return) movement of the piston in the body (1) takes place, and an excessive pressure of the working liquid is produced in the compression (2) (expansion [3]) chamber, which acts on the plate (11) (plate [14]) of the compression (expansion) valve and causes movement of that plate and elastic deformation of the elastic element (12) (elastic element [15]). The elastic force of the elastic element which is produced thereby compensates the force with which the excessive pressure acts on the plate (11) (plate [14]). As a result, the plate of the valve is fixed at some position which determines the size of the cross section of the slit of that valve, corresponding to the current value of the excessive pressure. Furthermore, when the piston moves along the body (1), the gates (33) and (35) move relative to the piston element (5) as a result of the interaction of the gates with the guides (21) and (36). At each point of the piston stroke section the position of the gate (33) is determined by the transverse profile of the guide (21), while the position of the gate (35) is determined by the transverse profile of the guide (36). Due to the movement, the gate (33) (gate [35]) closes the aperture (7) (aperture [9]) with its body, and a change in the flow cross section of the supply channel of the compression (expansion) valve takes place. Furthermore, due to displacement of the protrusion of the gate, the area of the seat of that valve changes.

A change in the area of the seat of the compression valve results in a change of the force with which the excessive pressure in the compression chamber (2) acts on the plate (11), which in turn results in a change in the height of the slit of the compression valve, and accordingly, to a change in the cross section of that slit. A change in the area of the seat of the expansion valve results in a change of the force with which the excessive pressure in the expansion chamber (3) acts on the plate (14), which in turn results in a change in the height of the slit of the expansion valve, and, accordingly, in a change in the cross section of that slit.

The seventh main variant of the proposed method may be carried out in the following manner. The makeup of the damper includes a structural element which controls the linear displacement of the supports of the elastic elements of the compression and expansion valves along the longitudinal axis of the working cylinder relative to the seats of those valves. During the forward (return) movement of the piston in the working cylinder of the damper, the size of the cross section of the slit of the compression (expansion) valve is changed in direct proportion to the value of the excessive pressure of the working liquid in the compression (expansion) chamber. For this, the force with which the excessive pressure acts on the plate of the compression (expansion) valve is balanced by the oppositely directed elastic force of the elastic element of that valve. Furthermore, by means of a structural element which controls displacement of the supports of the elastic elements of the valves, the movement of the piston is converted into linear displacement of those supports relative to the seats of corresponding valves. Each position of the piston in the working cylinder of the damper sets in accordance therewith a linear position of the support of the elastic element of the compression (expansion) valve relative to the seat of that valve, and each such position of the support sets in accordance therewith a value of an elastic deformation of the elastic element of that valve and an elastic force which it creates. Thus, each position of the support of the elastic element of the compression (expansion) valve sets in accordance therewith a value of the cross section of the slit of that valve corresponding to a constant excessive pressure in the compression (expansion) chamber.

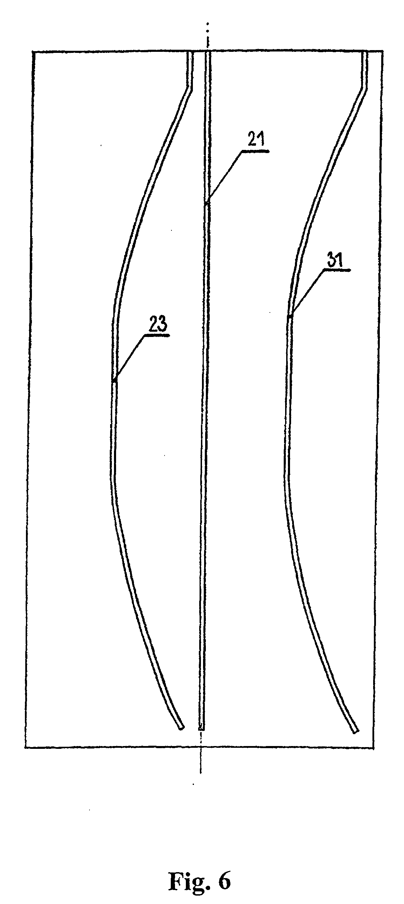

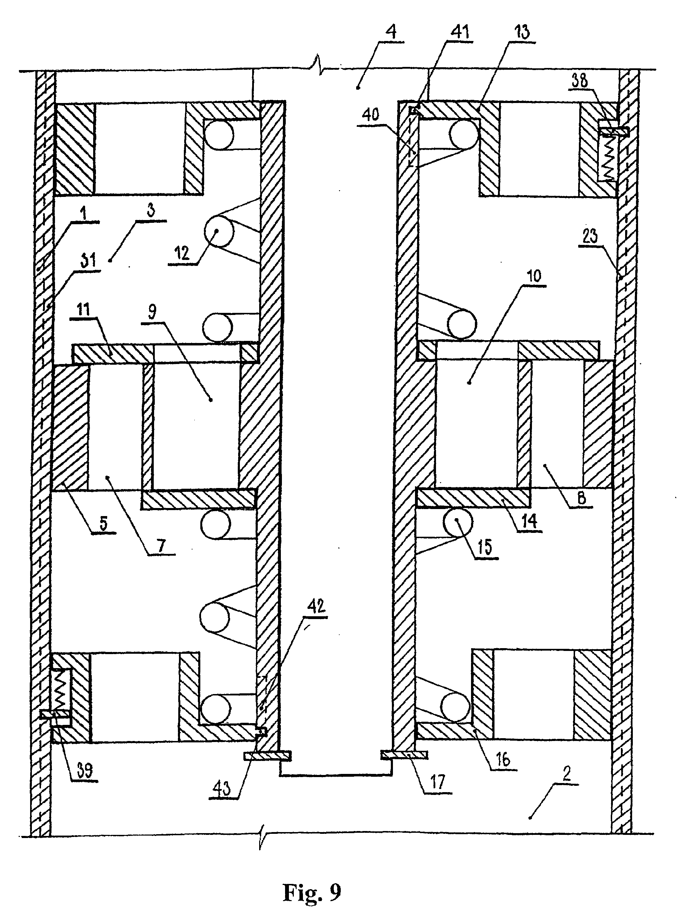

The device shown in Fig. 9 may be used to carry out the seventh main variant of the proposed method. This device is a liquid damper. The device has a cylindrical body (1), which at the same time is the working cylinder of the damper, a compression chamber (2) and an expansion chamber (3), which are formed as a result of dividing the cavity of the damper with a piston. The piston is secured to an end of the rod (4) and consists of a main element (5) which has cylindrical shanks. Apertures (7) and (8), which form a supply channel of the compression valve, and apertures (9) and (10), which form a supply channel of the expansion valve, are made in the body of the element (5). The compression valve includes a plate (11), which closes the apertures (7) and (8), an elastic element (12) and a support (13) of the elastic element. The expansion valve includes a plate (14), which closes the apertures (9) and (10), an elastic element (15) and a support (16) of the elastic element. The parts of the valves and the element (5) are secured on the rod (4) by a retaining ring (17). Three longitudinal guides are made on the section of the inner surface of the body (1), which coincides with the stroke of the piston. A guide (21) is made rectilinear and via a side protrusion (22) of the element (5) interacts with the element (5). A guide (23) is made helical and via a pin (38), which is mounted in the support (13), interacts with the support (13). A guide (31) is made helical and via a pin (39), which is mounted in the support (16), interacts with the support (16). The developed view of the inner surface of the working cylinder (1) is similar to the developed view shown in Fig. 6. At each point of the piston stroke the central angle between the guide (23) and the guide (21) sets the angle of turn of the support (13) relative to the element (5), and the central angle between the guide (31) and the guide (21) sets the angle of turn of the support (16) relative to the element (5). In the middle section of the piston stroke, which in this device corresponds to the maximum cross section of the slits of the compression and expansion valves at a constant value of the excessive pressure of the working liquid, the central angles between the guides (23) and (21) and between the guides (31) and (21) are equal to 90 degrees. A helical guide is made on the outer surface of each shank of the element (5). The support (13) interacts with a guide (40) via a side protrusion (41). The support (16) interacts with a guide (42) via a side protrusion (43). For each angle of turn of the support (13) relative to the element (5), the guide (40) sets a linear position of the support (13) relative to the seat of the compression valve. For each angle of turn of the support (16) relative to the element (5), the guide (42) sets the linear position of the support (16) relative to the seat of the expansion valve. In order to prevent seizure in the guide (23), the pin (38) has the possibility of longitudinal displacement in the support (13) by a value equal to the longitudinal size of the guide (40). In order to prevent seizure in the guide (31), the pin (39) has the possibility of longitudinal displacement in the support (16) by a value equal to the longitudinal size of the guide (42).

In the position of static balance, when the weight of the sprung mass of the vehicle is balanced by the elastic force of the elastic element of the suspension, the piston of the damper is in the middle of its stroke section. At that point of the piston stroke section, the central angles between the guide (21) and the guide (23) and between the guide (31) and the guide (21) are equal to 90 degrees. In that position, the supports (13) and (16) are spaced maximum from the seats of the compression and expansion valves. In the position of static balance, there is no excessive pressure of the working liquid in the cavities of the damper, and the compression and expansion valves are closed. During compression (expansion) of the vehicle suspension, a forward (return) movement of the piston in the body (1) takes place, and an excessive pressure of the working liquid is produced, which acts on the plate (11) (plate[14]) of the compression (expansion) valve and causes displacement of that plate and elastic deformation of the elastic element (12) (elastic element [15]). The elastic force of the elastic element produced thereby compensates the force with which the excessive pressure acts on the plate (11) (plate [14]). As a result of this, the plate of the Valve is fixed at a position which determines the size of the cross section of the slit of that valve, corresponding to the current value of the excessive pressure. Furthermore, when the piston moves along the body (1), the support (13) turns relative to the element (5) and the support (16) turns relative to the element (5) as a result of the interaction of the supports with the guides (23) and (31). The angle of turn of the support (13) at each point of the piston stroke section is determined by the central angle between the guide (23) and the guide (21). The angle of turn of the support (16) at each point of the piston stroke section is determined by the central angle between the guide (31) and the guide (21). In the process of turning relative to the piston, the support (13) moves along the helical guide (40) and changes its position relative to the seat of the compression valve. Wherein, a change in the elastic deformation of the elastic element (12) and a change in the created thereby elastic force take place. The position of the plate (11) and the cross section of the slit of the compression valve, which correspond to a constant excessive pressure in the compression chamber (2) change as a result of a change of the elastic force. In the process of turning relative to the piston, the support (16) moves along the helical guide (42) and changes its position relative to the seat of the expansion valve. Wherein, a change in the elastic deformation of the elastic element (15) and a change in the elastic force created thereby take place. As a result of a change in the elastic force, the position of the plate (14) and the cross section of the slit of the expansion valve, which correspond to a constant excessive pressure in the expansion chamber (3), take place.

Information confirming the possibility of attaining the claimed technical results when the proposed method is carried out is provided in Figs. 13-36 in the form of time diagrams of oscillations of the sprung mass of a vehicle and time diagrams of the force acting on the sprung mass during the forced oscillations thereof which are caused by external excitation of various amplitude and repetition frequency. A description of the content of the diagrams and their conditional designations are presented in the section "List of drawings and diagrams." Each drawing contains three diagrams and makes it possible to compare oscillation of the sprung mass or the force acting thereon for the cases in which the following dampers are used in the suspension of a vehicle:

a) a damper in which a known method for adjusting the resistance force is used and which has a soft resistance characteristic;

b) a damper in which a known method for adjusting the resistance force is used and which has a hard resistance characteristic;

c) a damper in which the proposed method for adjusting the resistance force is used.

The presented time diagrams were obtained by mathematical simulation of the process of forced oscillations of the sprung mass, in relation to one wheel of the vehicle. The used mathematical model takes into account the influence exerted by the damper, the elastic element of the suspension, compression buffer, expansion buffer, the elasticity and damping provided by a tire, a change in the unsprung mass in the process of compression (expansion) of the suspension.

For a more complete evaluation of the degree of influence of the dampers being compared on the oscillation process, the resistance characteristics of the dampers being compared in which the known method for adjusting the resistance force is used are shown in Fig. 11, and the damping which these dampers provide in the simulated oscillation process is shown in Fig. 12.

The best variant for carrying out the invention is the fifth main variant of the proposed method. This variant is described in the instant section of the specification.

**Claims**

1. A method for adjusting the resistance force of a liquid damper, the cavity of which is divided into at least two chambers, the volume of one of which, a compression (expansion) chamber, is reduced, and the volume of another, an expansion (compression) chamber, is increased during forward (return) movement of a piston dividing them, the piston being positioned in a working cylinder of the damper, wherein due to the action of an excessive pressure formed in the compression (expansion) chamber relative to other cavities of the damper, during forward (return) movement of the piston working liquid flows through a compression (expansion) channel which couples the compression (expansion) chamber to other cavities of the damper, the action of the excessive pressure of the working liquid on parts of the damper creates a resistance force of the damper, mechanical energy spent on displacing the piston is consumed to accomplish work on overcoming said resistance force, wherein in order to adjust the resistance force of the damper a flow cross section of the compression (expansion) channel is changed depending on the value of the excessive pressure, wherefore the force with which the excessive pressure acts on a movable element of a compression (expansion) valve, a current position of which determines a current linear size of a slit of that valve, is balanced by an oppositely directed elastic force of an elastic element of that valve, characterized in that controlled displacement is provided for at least one part of the damper whose position relative to another part of the damper affects the size of the flow cross section of the compression (expansion) channel, the forward (return) movement of the piston is converted into a change of the position of those parts relative to one another, wherein each position of the piston in the working cylinder of the damper sets in accordance therewith a position of those parts relative to one another, and each such position of the parts sets in accordance therewith a value of the flow cross section of the compression (expansion) channel corresponding to a constant value of the excessive pressure.

2. A method according to claim 1, characterized in that the forward (return) movement of the piston is converted into a turn of a damper part, closing a constant restrictor, relative to a damper part in which an aperture of the constant restrictor is made, each angle of turn of those parts relative to one another sets in accordance therewith a degree of closure of the aperture of the constant restrictor by a movable part.

3. A method according to claim 1, characterized in that the forward (return) movement of the piston is converted into a linear displacement of a damper part, closing a constant restrictor, relative to a damper part in which an aperture of the constant restrictor is made, each position of those parts relative to one another sets in accordance therewith a degree of closure of the aperture of the constant restrictor by a movable part.

4. A method according to claim 1, characterized in that the forward (return) movement of the piston is converted into a turn of a damper part, closing a supply channel of the compression (expansion) valve, relative to a damper part in which an aperture of that supply channel is made, each angle of turn of those parts relative to one another sets in accordance therewith a degree of closure of the aperture of the supply channel by a movable part.

5. A method according to claim 1, characterized in that the forward (return) movement of the piston is converted into linear displacement of a damper part, closing a supply channel of the compression (expansion) valve, relative to a damper part in which an aperture of that supply channel is made, each position of those parts relative to one another sets in accordance therewith a degree of closure of the aperture of the supply channel by a movable part.

**6.** A method according to claim 1, characterized in that the forward (return) movement of the piston is converted into a turn of a damper part relative to another damper part which together with the first part forms a seat of the compression (expansion) valve, each angle of turn of those parts relative to one another sets in accordance therewith a size of an area limited by the seat of the compression (expansion) valve and a force with which the excessive pressure of the working liquid in the compression (expansion) chamber acts on the movable element of the compression (expansion) valve, the current position of which determines the current linear size of the slit of that valve.

**7.** A method according to claim 1, characterized in that the forward (return) movement of the piston is converted into a linear displacement of a damper part relative to another damper part which together with the first part forms a seat of the compression (expansion) valve, each position of those parts relative to one another sets in accordance therewith a size of an area limited by the seat of the compression (expansion) valve and a force with which the excessive pressure of the working liquid in the compression (expansion) chamber acts on the movable element of the compression (expansion) valve, the current position of which determines the current linear size of the slit of that valve.

**8.** A method according to claim 1, characterized in that the forward (return) movement of the piston is converted into linear displacement of a support of the elastic element of the compression (expansion) valve relative to a seat of that valve, each position of the support relative to the seat sets in accordance therewith a value of elastic deformation of the elastic element of the compression (expansion) valve and an elastic force with which the elastic element acts on the movable element of the valve, the current position of which determines the current linear size of the slit of that valve.

**9.** A device for adjusting the resistance force of a liquid damper, which device is a liquid damper and has compression and expansion chambers, formed as a result of dividing a cavity of the damper with a piston which is secured to a rod and consists of at least two elements, a compression (expansion) channel, through which there is a flow of a working liquid from the compression (expansion) chamber to the expansion (compression) chamber during forward (return) movement of the piston in a working cylinder of the damper and which includes at least a compression (expansion) valve which has a supply channel made in a body of the piston, a plate covering an outlet aperture of the supply channel from the side of the expansion (compression) chamber, and an elastic element, the action of the elastic force of which on the plate is directed towards the piston, **characterized** in that at least two piston elements have the possibility of separately turning about the longitudinal axis of the working cylinder of the damper, a cylindrical structural element is provided coaxial with the rod of the damper, at least two longitudinal guides are made on a section of the surface of the cylindrical structural element, at least one of the guides is made helical, in each point of the piston stroke a central angle between the guides sets an angle of turn of a first piston element relative to a second element, at least one structural element is positioned on a side surface of both the first and the second piston elements which faces the cylindrical structural element, via the structural element the first piston element interacts with one of the guides of the cylindrical structural element, and the second piston element interacts with another guide of the cylindrical structural element, at least two apertures forming a through channel in the body of the piston, one of which is made in the first piston element, the other is made in the second piston element, when the piston is in a position corresponding to a minimum flow cross section of the compression (expansion) channel with the compression (expansion) valve completely open, the cross section of the channel formed by those apertures is at the most less than the flow cross section of that same channel when the piston is in a position corresponding to a maximum flow cross section of the compression (expansion) channel with the compression (expansion) valve completely open.

**10.** A device according to claim 9, characterized in that the guides with which the piston elements interact are made on the inner surface of the working cylinder of the damper.

**11.** A device according to claim 9, characterized in that the rod of the damper is made hollow, the guides with which the piston elements interact are made on the external surface of a pin which is secured on the bottom of the compression chamber and which moves into a cavity of the rod during forward movement of the piston.

**12.** A device according to claim 10 or claim 11, characterized in that the piston of the damper is provided with a third element which is similar to the first two elements and is positioned from the side of the compression chamber or the expansion chamber, an additional longitudinal guide, similar to the other guides, is made on the surface of the cylindrical structural element, the third piston element interacts with the additional guide, in each point of the piston stroke a central angle between that guide and a guide interacting with the piston element positioned in the middle of the piston sets an angle of turn of those piston elements relative to one another, the supply channel of the compression (expansion) valve is formed by at least three apertures, each of which is made in one of the three piston elements, these apertures have the form of a sector of a ring with a center on the longitudinal axis of the working cylinder of the damper and have equal external and internal radiuses, a radial side of an aperture of the supply channel of the compression (expansion) valve made in the piston element positioned in the middle of the piston, which during reduction of the flow cross section of that supply channel approaches the radial side of the outlet aperture of that same supply channel, is limited by a protrusion of the piston element, the protrusion has the form of a sector of a ring with a center on the longitudinal axis of the working cylinder of the damper and extends through the outlet aperture of the supply channel of the compression (expansion) valve, this protrusion together with the piston element surface which limits the outlet aperture from the side of the expansion (compression) chamber forms a seat of the compression (expansion) valve, in each point of the piston stroke the flow cross section, formed by the inlet aperture of the supply channel of the compression (expansion) valve and the aperture of that same supply channel which is made in the piston element positioned in the middle of the piston, is at least equal to the flow cross section formed by the latter aperture and the outlet aperture of the supply channel of the compression (expansion) valve.

13. A device for adjusting the resistance force of a liquid damper, which device is a liquid damper and has compression and expansion chambers, formed as a result of dividing a cavity of the damper with a piston which is secured to a rod, a compression (expansion) channel, through which there is a flow of a working liquid from the compression (expansion) chamber to the expansion (compression) chamber during forward (return) movement of the piston in a working cylinder of the damper and which includes at least a compression (expansion) valve which has a plate covering an outlet aperture of the supply channel of that valve from the side of the expansion (compression) chamber, an elastic element, the elastic deformation of which occurs along the longitudinal axis of the working cylinder of the damper, and a support of the elastic element, which fixes the position of the end of the elastic element opposite the piston relative to a seat of the compression (expansion) valve, characterized in that the piston of the damper and the support of the elastic element of the compression (expansion) valve have the possibility of separately turning about the longitudinal axis of the working cylinder of the damper, at least two longitudinal guides are made on the inner surface of the working cylinder of the damper on the section coinciding with the piston stroke, at least one of the longitudinal guides is made helical, in each point of the piston stroke a central angle between the guides sets an angle of turn of the support of the elastic element of the compression (expansion) valve relative to the piston, a structural element, via which the piston interacts with one of the guides, is positioned on a side surface of the piston facing the inner surface of the working cylinder of the damper, a structural element via which the support of the elastic element of the compression (expansion) valve interacts with another guide is positioned on a side surface of that support, the support of the elastic element of the compression (expansion) valve has the possibility of moving along a cylindrical shank of the piston, the axis of which shank coincides with the longitudinal axis of the working cylinder of the damper and on the external surface of which at least one longitudinal helical guide is made, this guide sets a longitudinal position of the support of the elastic element of the compression (expansion) valve on the cylindrical shank of the piston for each angle of turn of that support relative to the piston, a structural element, via which the support of the elastic element of the compression (expansion) valve interacts with the guide positioned on the shank of the piston, is positioned on a side surface of that support facing the cylindrical shank of the piston, the structural element, via which the support of the elastic element of the compression (expansion) valve interacts with the guide made on the working cylinder of the damper, has the possibility of moving along that support in the direction of the longitudinal axis of the working cylinder of the damper by a length at least equal to the maximum length of movement of that support along the cylindrical shank of the piston.

14. A device for adjusting the resistance force of a liquid damper, which device is a liquid damper and has compression and expansion chambers, formed as a result of dividing a cavity of the damper with a piston which is secured to a rod, a compression (expansion) channel, through which there is a flow of a working liquid from the compression (expansion) chamber to the expansion (compression) chamber during forward (return) movement of the piston in a working cylinder of the damper and which includes at least a compression (expansion) valve which has a supply channel made in the body of the piston, a plate covering an outlet aperture of the supply channel from the side of the expansion (compression) chamber, and an elastic element, the action of the elastic force of which on the plate is directed toward the piston, characterized in that at least one through aperture in the piston is covered by a movable gate, has a longitudinal structural element, at least one longitudinal guide is made on a section of the surface of that element which coincides with the piston stroke, the movable gate is pressed against the longitudinal guide by an elastic element, the transverse profile of the longitudinal guide sets in each point of the piston stroke a position of the movable gate relative to the aperture covered thereby, the flow cross section of the channel, formed by the movable gate and the aperture covered thereby in the position of the piston corresponding to the minimum flow cross section of the compression (expansion) channel when the compression (expansion) valve is completely open, is at the most less than the flow cross section of that same channel in the position of the piston corresponding to the maximum flow cross section of the compression (expansion) channel when the compression (expansion) valve is completely open.

15. A device according to claim 14, characterized in that the guide with which the movable gate interacts is made on the inner surface of the working cylinder of the damper.

16. A device according to claim 14, characterized in that the rod of the damper is made hollow, the guide with which the movable gate interacts is made on the external surface of a pin which is secured on a bottom of the compression chamber and which during forward movement of the piston moves into the cavity of the rod.

17. A device according to claim 15 or claim 16, characterized in that the aperture covered by the movable gate forms a supply channel of the compression (expansion) valve and has a constant size, which is perpendicular to the direction of movement of the movable gate, the movable gate has a protrusion perpendicular to the direction of its movement, which passes through the aperture closed thereby and together with the piston surface which limits that aperture from the side of the expansion (compression) chamber forms a seat of the compression (expansion) valve.

**Amended claims under Art. 19.1 PCT**

[received from the International Bureau on October 27, 1999; originally field claims 9 to 17 of the application are replaced by new claims 9 to 15 (5 pages)].

9. A device for adjusting the resistance force of a liquid damper, which device is a liquid damper and has compression and expansion chambers formed as a result of dividing a cavity of the damper by a piston which is secured at a rod, a compression (expansion) channel through which a working liquid flows from the compression (expansion) chamber to the expansion (compression) chamber during forward (return) movement of the piston in a working cylinder of the damper, said compression (expansion) channel including at least a compression (expansion) valve having a supply channel made in a body of the piston, a plate shutting off an outlet aperture of the supply channel on the side of the expansion (compression) chamber, and an elastic element, the action of the elastic force of said elestic element being directed towards the piston, *characterized* in that at least one through aperture in the piston is shut off by a movable member, has a longitudinal structural element with a section of the surface thereof coinciding with the piston stroke, at least one longitudinal guide being provided on said section, said movable member cooperating with said longitudinal guide, the configuration of the longitudinal guide sets in each point of the piston stroke a position of the movable member relative to the aperture shut off therewith in the position of the piston corresponding to the minimum flow cross section of the compression (expansion) channel when the compression (expansion) valve is completely open, the flow cross section of a channel formed by the movable member and the aperture shut off therewith is at most less than the flow cross section of the same channel in the position of the piston corresponding to the maximum flow cross section of the compression (expansion) channel when the compression (expansion) valve is completely open.

10. A device according to Claim 9, *characterized* in that the aperture shut off by the movable member forms the supply channel of the compression (expansion) valve, a part of the surface of the movable member, which is parallel to the plane of movement of this member, forms a seat of the comprission (expansion) valve together with a part of die piston surface, which is parallel to the plane of movement of the movable member and defines on the side of the expansion (compression) chamber the aperture shut off by the movable member.

11. A device according to Claim 9 or Claim 10, *characterized* in that the movable member is arranged to turn about the longitudinal axis of the working cylinder of the damper, the longitudinal structural element has a cylindrical shape, is coaxial with the working cylinder of the damper and has at least two longitudinal guides, one of said guides cooperating with the piston, the other guide cooperating with the movable member, the configuration of at least one guide being helical, a central angle between said two guides sets in each point of the piston stroke a position of the movable member relative to the aperture shut off therewith.

**12.** A device according to Claim 9 or Claim 10, *characterized* in that said movable member is adapted to move linearly along the piston radius, radial movement of at least one surface of the longitudinal guide away from the axis of the working cylinder of the damper sets in each point of the piston stroke a position of the movable member relative to the aperture shut off therewith.

**13.** A device according to Claim 9 or Claim 10 or Claim 11 or Claim 12, *characterized* in that the working cylinder of the damper is a structural element on which at least one longitudinal guide is provided.

**14.** A device according to Claim 9 or Claim 10 or Claim 11 or Claim 12, *characterized* in that a rod of the damper is made hollow, the structural element on which at least one longitudinal guide is provided is formed as a pin which is secured on the bottom of the compression chamber and which moves into a cavity of the rod as the piston moves forward.

**15.** A device for adjusting the resistance force of a liquid damper, which device is a liquid damper and has compression and expansion chambers formed as result of dividing a cavity of the damper cavity by a piston which is secured at a rod, a compession (expansion) channel through which a working liquid flows from the compression (expansion) chamber to the expansion (compression) chamber during forward (return) movement of the piston in a working cylinder of the damper, said comperssion (expansion) channel comprising at least a compression (expansion) valve which has a plate shutting off an outlet aperture of a supply channel of the valve on the side of the expansion (compression) chamber, an elastic element, the elastic deformation of which occurs along the longitudinal axis of the working cylinder of the damper, and a support of the elastic element which fixes the position of the end of the elastic element opposite the piston relative to a seat of the compression (expansion) valve, *characterized* in that the piston of the damper and the support of the elastic element of the compression (expansion) valve are arranged to turn separately about the longitudinal axis of the working cylinder of the damper, at least two longitudinal guides being provided on the internal surface of the working cylinder of the damper on a section coinciding with the piston stroke, at least one of said longitudinal guides is made helical, in each point of the piston stroke a central angle between the guides sets an angle of turn of the support of the elastic element of the compression (expansion) valve relative to the piston, a structural element, via which the piston cooperates with one of the guides, is positioned on a side surface of the piston facing the internal surface of the working cylinder of the damper, a structural element, via which the support of the elastic element of the compression (expansion) valve cooperates with another guide is positioned on a side surface of that support, said support of the elastic element of the compression (expansion) valve being adapted to move along a cylindrical shank of the piston, the axis of said shank coinciding with the longitudinal axis of the working cylinder of the damper, and at least one longitudinal helical guide is provided on the external surface of the shank, said guide sets a longitudinal position of the support. of the elastic element of the compression (expansion) valve on the cylindrical shank of the piston for each angle of turn of that support relative to the piston, the structural element, via which the support of the elastic element of the compression (expansion) valve cooperates with the guide positioned on the shank of the piston, is placed on the side surface of that support facing the cylindrical shank of the piston, the structural element, via which the support of the elastic element of the compression (expansion) valve cooperates with the guide provided on the working cylinder of the damper, is adapted to move along said guide in the direction of the longitudinal axis of the working cylinder of the damper through a length at least equal to the maximum length of movement of this support along the cylindrical shank of the piston.

**Fig. 1**

Fig. 2

**Fig. 3**

**Fig. 4**

DIRECTION OF TURN AT A REDUCTION
OF THE FLOW SECTION OF THE SUPPLY
CHANNEL OF THE COMPRESSION VALVE

DIRECTION OF TURN AT A REDUCTION
OF THE FLOW SECTION OF THE SUPPLY
CHANNEL OF THE EXPANSION VALVE

Fig. 5

**Fig. 6**

Fig. 7

**Fig. 8**

**Fig. 9**

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

**Fig. 23**

Fig. 24

Fig. 25

Fig. 26

Fig. 27

Fig. 28

Fig. 29

**Fig. 30**

**Fig. 31**

Fig. 32

Fig. 33

Fig. 34

Fig. 35

Fig. 36

## INTERNATIONAL SEARCH REPORT

| International application No. |
| --- |
| PCT/RU 98/ 00420 |

**A. CLASSIFICATION OF SUBJECT MATTER**
IPC6    B60G 17/08, F16F 9/48
According to International Patent Classification (IPC) or to both national classification and IPC

**B. FIELDS SEARCHED**

Minimum documentation searched (classification system followed by classification symbols)
IPC6    B60G 13/08, 17/00, 17/06, 17/08; F16F 9/34, 9/32, 9/48-9/50

Documentation searched other than minimum documentation to the extent that such documents are included in the fields searched

Electronic data base consulted during the international search (name of data base and, where practical, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | RU 2020320 C1 (PROIZVODSTVENNOE OBIEDINENIE « ZAVOD » IM. V.A. DEGTYAREVA) 30 September 1994 (30.09.94) | 1-8; 9-12; 13; 14-17 |
| A | RU 2031275 C1 (VLASOV VALENTIN NIKOLAEVICH) 20 March 1995 (20.03.95) | 1-8; 9-12; 13; 14-17 |
| A | WO 85/00209 A1 (LASER ENGINEERING (DEVELOPMENT) LIMITED) 17 January 1985 (17.01.85), the abstract, fig. 1 | 1-8; 9-12; 13; 14-17 |
| A | US 4057129 (RANSOM J. HENNELLS) 8 November 1977 (08.11.77), the abstract, fig. 1 | 1-8; 9-12; 13; 14-17 |

☐    Further documents are listed in the continuation of box C.          ☐    Patent family members are listed in annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| | "X" document of particular relevance: the claimed invention cannot be considered novel or cannot be considered to involve an inventive step when the document is taken alone |
| "E" earlier document but published on or after the international filing date | |
| "L" document which may throw doubts on priority claim(s) or which is cited to establish the publication date of another citation or other special reason (as specified) | "Y" document of particular relevance; the claimed invention cannot beconsidered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| 26 March 1999 (26.03.99) | 07 April 1999 (07.04.99) |

| Name and mailing address of the ISA/ RU | Authorized officer |
| --- | --- |
| | Telephone No. |

Form PCT/ISA/210 (second sheet) (July 1992)